# EUROPÄISCHE PATENTSCHRIFT

(11) **EP 2 352 779 B1**
(45) Veröffentlichungstag und Bekanntmachung des Hinweises auf die Patenterteilung: **18.10.2017**
(21) Anmeldenummer: 09748780.5
(22) Anmeldetag: 05.11.2009
(51) Int. Cl.: C08G 77/18, C08G 77/46, C08L 83/12

(54) **ALKOXYSILYLGRUPPEN TRAGENDE POLYETHERSILOXANE SOWIE VERFAHREN ZU DEREN HERSTELLUNG**
POLYETHERSILOXANES CARRYING ALKOXYSILYL GROUPS AND METHOD FOR THE PRODUCTION THEREOF
POLYÉTHERSILOXANES À GROUPES ALCOXYSILYLE ET LEUR PROCÉDÉ DE PRÉPARATION

(30) Priorität: 05.12.2008 DE 102008044373
(43) Veröffentlichungstag der Anmeldung: 10.08.2011
(73) Patentinhaber: Evonik Degussa GmbH, 45128 Essen (DE)
(72) Erfinder: SCHUBERT, Frank, 47506 Neukirchen-Vluyn (DE); HENNING, Frauke, 45130 Essen (DE); KNOTT, Wilfried, 45355 Essen (DE)
(86) Internationale Anmeldenummer: PCT/EP2009/064678
(87) Internationale Veröffentlichungsnummer: WO 2010/063531

(56) Entgegenhaltungen:
- US-A- 5 719 249
- US-A1- 2002 091 219
- US-A1- 2008 171 829

## Beschreibung

Die Erfindung betrifft neue Alkoxysilylgruppen tragende Polyethersiloxane und deren Herstellung durch Alkoxylierung von Siliconpolyethern mit epoxidfunktionellen Alkoxysilanen an DMC-Katalysatoren beziehungsweise durch hydrosilylierende Verknüpfung von Alkoxysilylgruppen aufweisenden olefinisch ungesättigten Polyethern mit Si-H-Gruppen tragenden Siloxanen.
Siliconpolyether-Copolymere, auch Polyethersiloxane oder einfach Siliconpolyether genannt, stellen eine Substanzklasse dar, die Eingang in vielfältige technische Anwendungen nimmt, z.B. als Tenside, Emulgatoren, Netz- und Dispergieradditive, Lackverlaufsmittel, Schmiermittel, als Hilfsmittel zur tertiären Erdölförderung, als Textilhilfsmittel zum Avivieren von Fasern, Garnen oder flächigen Textilprodukten, als Entschäumer, als kosmetische Additive (Emulgatoren) und als Schaumstabilisatoren insbesondere im Polyurethan-Schaum.
Die Polyethersiloxane sind vielseitig verwendbar, da man ihre Eigenschaften, insbesondere ihre Hydrophil/Hydrophob-Balance durch geeignete Wahl des Siloxanblockes oder der Siloxanblöcke einerseits und durch geeigneten Aufbau des Polyetherblockes oder der Polyetherblöcke beeinflussen und auf den gewünschten Wert einstellen kann.

Im Rahmen dieser Erfindung umfasst der Begriff Polyether sowohl Polyether, Polyetherole, Polyetheralkohole, Polyetherester aber auch Polyethercarbonate, die gegebenenfalls synonym zueinander verwendet werden.

Der Siloxanblock kann linear oder verzweigt sein, wobei die absolute Zahl an di- und trifunktionellen Siloxy-Einheiten und deren Zahlenverhältnis zueinander in weiten Grenzen einstellbar sind. Es ist darüber hinaus möglich, neben Polyoxyalkylenresten auch andere modifizierende Gruppen an die Si-Atome zu binden. Beispiele sind langkettige Kohlenwasserstoffreste, mit Halogenatomen, Cyanogruppen oder polaren Resten substituierte Kohlenwasserstoffreste, Hydroxylgruppen, etc.

Bei den Siliconpolyether-Copolymeren unterscheidet man prinzipiell zwischen SiOC- bzw. SiC-verknüpften Systemen. Im ersten Fall ist das Siloxangerüst via SiOC-Bindungen mit den Polyetherresten verbunden. Im zweiten Fall erfolgt die Verknüpfung des Siloxanteils mit den Polyetherresten über SiC-Bindungen.

Die ältere Route der SiOC-Verknüpfung bedient sich z.B. des Einsatzes von Chlorsiloxanen, die mit Polyetheralkoholen und oft auch unter Einsatz aminischer Hilfsbasen als Salzsäurefänger zu Polyethersiloxanen umgesetzt werden. Ein alternativer Zugang zu SiOCbasierten Polyethersiloxanen erschließt sich über die dehydrogenative Umsetzung SiH-Gruppen-tragender Siloxane (Wasserstoffsiloxane) mit Polyetheralkoholen in Gegenwart von Katalysatoren. Als Katalysatoren finden z.B. Säuren, Basen und Metallkomplexe und auch Tris(pentafluorphenyl)boran Verwendung, wie beispielsweise in der DE 10 2005 004 676 beschrieben ist. Spezielle lineare Polyethersiloxane sind durch direkte Alkoxylierung von SiOH-Gruppen tragenden α, ω-Dihydroxysiloxanen mit Epoxidmonomeren zugänglich, wie es in der nicht vorveröffentlichten Schrift DE 10 2008 002713.8 beschrieben wird.

Die US 2008/171829 offenbart SiOC verknüpfte Siloxan-Polyether Blockcopolymere deren Polyether Baustein mittels DMC Katalyse dargestellt wurde. Die offenbarten Polyether Bausteine enthalten dabei keine Alkoxysilyl modifizierten Seitenketten.

Den Zugang zu SiC-verknüpften Polyethersiloxan-Copolymeren eröffnet die Hydrosilylierung, d.h. die zumeist Edelmetall-katalysierte Addition SiH-Gruppen aufweisender Siloxane an ungesättigte Polyether z.B. an Derivate des Vinyl- oder Allylalkohols, wie im Stand der Technik, z. B. in EP 1 520 870, beschrieben. Zur Synthese der verbreiteten Allylpolyether-basierten Copolymersysteme werden die ungesättigten Polyether im deutlichen stöchiometrischen Überschuss von meist 20 bis 40 mol-% bezogen auf die SiH-Äquivalente des verwendeten Wasserstoffsiloxans eingesetzt, um der Tatsache Rechnung zu tragen, dass je nach gewähltem Herstellweg wechselnde Mengen an Propenylpolyether bereits im Allylpolyether enthalten sind und, um der in der Hydrosilylierung unvermeidbaren Allyl-Propenyl-Umlagerung zu begegnen, die einen Teil des eingesetzten Allylpolyethers für die SiC-Verknüpfungssreaktion unbrauchbar macht. Es sei darauf hingewiesen, dass die Begriffe Polyether oder Polyetherol teilweise synonym in der Literatur und dieser Anmeldung Verwendung finden.

Als Konsequenz aus diesem Vorgehen enthalten die technisch verfügbaren SiC-verknüpften Siliconpolyether-Copolymere, die sich von Allylpolyethern herleiten, nicht unbeträchtliche Mengen des isomerisierten Überschusspolyethers, der mit seiner β-ständigen Doppelbindung nicht mehr hydrosilylierbar ist. Die geringere Reinheit der so hergestellten Polyethersiloxane bedingt ihren charakteristischen Geruch, was die Verwendbarkeit der Produkte limitiert. Additive in kosmetischen Formulierungen müssen gesundheitlich unbedenklich und geruchsfrei sein. Im Stand der Technik gibt es eine Vielzahl an nachträglichen Aufreinigungsverfahren, wie beispielsweise die EP 1 431 331 beschreibt.

Führt man die Hydrosilylierung ohne einen Überschuss an Allylpolyether durch, so führen die verwendeten Edelmetallkatalysatoren abhängig von ihrer Beschaffenheit und den Reaktionsbedingungen in unterschiedlich starkem Ausmaß zu Nebenreaktionen. So reichen geringe Mengen Feuchtigkeit aus, um verbleibende SiH-Funktionen hydrolytisch unter Wasserstoffabspaltung zu zersetzen und die entstandenen Silanole untereinander oder mit den hydroxyfunktionellen Kettenenden der Polyether zu kondensieren. Auf diese Weise kommt es zu unerwünschtem Molmassenaufbau bis hin zur Vergelung.

Konventionelle Polyetheralkohole, oft auch kurz einfach als Polyether bezeichnet und vorwiegend aus Propylenoxid und Ethylenoxid aufgebaut, sind seit langem bekannt und werden in großen Mengen technisch hergestellt. Sie dienen unter Anderem durch Umsetzung mit Polyisocyanaten als Ausgangsverbindungen zur Herstellung von Polyurethanen oder aber auch zur Herstellung von Tensiden.

Die meisten Verfahren zur Herstellung von Alkoxylierungsprodukten (Polyethern) bedienen sich basischer Katalysatoren wie z.B. der Alkalihydroxide und der Alkalimethylate.
Besonders verbreitet und seit vielen Jahren bekannt ist der Einsatz von KOH. Typischerweise wird ein meist niedermolekularer hydroxy-funktioneller Starter wie Butanol, Allylalkohol, Propylenglykol oder Glycerin in Gegenwart des alkalischen Katalysators mit einem Alkylenoxid wie Ethylenoxid, Propylenoxid, Butylenoxid oder einem Gemisch verschiedener Alkylenoxide zu einem Polyoxyalkylenpolyether umgesetzt. Die stark alkalischen Reaktionsbedingungen fördern verschiedene Nebenreaktionen. Durch Umlagerung von Propylenoxid in Allylalkohol, der seinerseits als Kettenstarter fungiert, und Kettenabbruchreaktionen entstehen Polyether mit relativ breiter Molmassenverteilung und ungesättigten Nebenprodukten. Insbesondere mit Allylalkohol als Startalkohol bringt die unter alkalischer Katalyse durchgeführte Alkoxylierungsreaktion auch Propenylpolyether hervor, die in Bezug auf die hydrosilylierende Weiterverarbeitung zu SiC-gestützten Siliconpolyether-Copolymeren unreaktive Beiprodukte darstellen.

Zu den Nachteilen der basisch katalysierten Alkoxylierung zählt zweifelsfrei auch die Notwendigkeit, die erhaltenen Reaktionsprodukte mit Hilfe eines Neutralisationsschrittes von der aktiven Base zu befreien. Zwingend erforderlich sind dann die destillative Abtrennung des bei der Neutralisation entstehenden Wassers sowie die Abtrennung des gebildeten Salzes durch Filtration.
Neben der basenkatalysierten Reaktion sind auch saure Katalysen zur Alkoxylierung bekannt. So wird in DE 102004007561 die Verwendung von HBF₄ und von LewisSäuren wie z.B. BF₃, AlCl₃ und SnCl₄ in der Alkoxylierungstechnologie beschrieben.
Als nachteilig bei der säurekatalysierten Polyethersynthese erweist sich die mangelhafte Regioselektivität bei der Ringöffnung unsymmetrischer Oxirane wie z.B. Propylenoxid, die dazu führt, dass in nicht eindeutig zu steuernder Weise Polyoxyalkylenketten mit teils sekundären und primären OH-Termini erhalten werden. Wie im Falle der basenkatalysierten Alkoxylierungsreaktion ist auch hier eine Aufarbeitungssequenz von Neutralisation, Destillation und Filtration unabdingbar. Wird Ethylenoxid als Monomer in die säurekatalysierte Polyethersynthese eingebracht, so ist mit der Bildung von Dioxan als unerwünschtem Nebenprodukt zu rechnen.

Säure- und/oder Base-labile Stoffsysteme können unter den dargelegten Bedingungen jedoch keinesfalls erfolgreich alkoxyliert werden. In besonderem Maße trifft dies auf Organokieselsäurederivate wie Alkoxysilanderivate und Organosiloxanverbindungen zu, die eine ausgeprägte Tendenz zur Säure- bzw.- Basen-induzierten Kondensations- und Vernetzungsreaktion bzw. zu Siloxangerüst umlagernden Äquilibrierungsreaktionen zeigen. Dieses ist umso mehr von Bedeutung, als dass sowohl die Säure- als auch Baseninduzierte Alkoxylierungsreaktion üblicherweise einer im wässerigen Medium nachgeschalteten Aufarbeitung bedürfen (Neutralisation, Salzabtrennung, Destillation zur Entfernung des Wassers).

Die noch unveröffentlichte Anmeldung DE 10 2008 002713.8 beschreibt ein spezielles Verfahren zur direkten Alkoxylierung von SiOH-funktionellen linearen Organosilanolen mit Alkylenoxiden in Gegenwart von Doppelmetallkatalysatoren zu SiOC-verknüpften Polyethersiloxanstrukturen.

Alkoxylierungen besonders schwer zugänglich sind organische Alkoxysilanverbindungen wie 3-Glycidyloxypropyltrimethoxy- bzw. -triethoxysilan, die z.B. unter den Handelsnamen DYNASYLAN® GLYMO bzw. DYNASYLAN® GLYEO (Warenzeichen der Evonik Degussa GmbH) erhältlich sind. Derartige Verbindungen nehmen Eingang in die Herstellung von organisch modifizierten Netzwerken beim Sol-Gel-Verfahren, das als Schlüsselprozess zur Herstellung von Nanocompositen dient, die Beschichtungssysteme mit verbesserten Eigenschaften im Hinblick auf Härte, Kratz- und Abriebfestigkeit, Temperaturresistenz sowie Lösemittel- und Säurebeständigkeit liefern. Alkoxysilanverbindungen finden des Weiteren vielfältigen Eingang in Dicht- und Klebstoffe sowie generell als reaktive Haftvermittler und Primer für verschiedene Substrate wie Metalle, Glas und Glasfasern/Glasgewebe für faserverstärkte Verbundwerkstoffe beispielsweise aus Holz oder Kork sowie zur Oberflächenbehandlung von z.B. Pigmenten und Füllstoffen in Lacken.

Wie dem Fachmann bekannt, geschieht die Vernetzung oder Härtung von Alkoxysilylgruppen in einem zweistufigen chemischen Prozess, bei dem in einem ersten Schritt in Gegenwart von Wasser die am Silizium gebundenen Alkoxygruppen als korrespondierende Alkohole abgespalten und SiOH-Gruppen ausgebildet werden. Letztere kondensieren im Falle der Selbstkondensation anschließend unter Ausbildung von Si-O-Si-Brücken miteinander und bilden polymere Werkstoffe. Alternativ reagieren die SiOH-funktionellen Intermediate mit reaktive Gruppen aufweisenden Substraten, z.B. besonders gut mit OH-Funktionen tragenden silikatischen Oberflächen, und führen zu einer exzellenten chemischen Verankerung auf dem jeweiligen Untergrund. Die Härtungsgeschwindigkeit lässt sich auf vielfältige Weise durch Zusatz von Katalysatoren oder Temperaturvariation beeinflussen.

Es hat nicht an Anstrengungen gefehlt, die Eigenschaftsprofile von Alkoxysilanverbindungen durch chemische Modifizierungen zu verbessern, um noch weitere Anwendungsgebiete für diese bedeutsame Produktklasse zu erschließen. So ist aus der Literatur bekannt, das Eigenschaftsprofil von Polyethern mit denen von vernetzbaren, speziell Alkoxysilylgruppen tragenden Verbindungen zu kombinieren. So stellt die DE 69 831518 T2 u.a. auf die Modifizierung von Polyetheralkoholen mit z.B. Isocyanatgruppen tragenden Alkoxysilanen unter urethanisierender Verknüpfung ab. Des Weiteren wird zur Alkoxysilyl-Modifizierung auch die hydrosilylierende Anbindung von monomeren Trialkoxysilanen an zuvor mit olefinisch ungesättigten Endgruppen modifizierten Polyetherolen gewählt.
Die JP 11-021463 stellt auf ein Verfahren zur Herstellung trialkoxysilylterminierter Polyoxyalkylenether ab, die sich von Glycerin als trifunktionellem Alkohol herleiten, indem die jeweiligen Glycerinpolyethertriole mit Isocyanatgruppen tragenden Trialkoxysilanen unter urethanisierender Verknüpfung modifiziert werden.

Die Patentschrift JP 08-295805 beansprucht ein im Wesen vergleichbares Verfahren, das die Trialkoxysilylmodifizierung von via DMC-Katalyse hergestellten Dipropylenglycolpolyetherdiolen mit Isocyanatgruppen tragenden Trialkoxysilanen umfasst.
Die Schriften JP 09-012863, JP 09-012861 und JP 07-062222 beanspruchen ein Verfahren zur Herstellung von ausschließlich terminal mit hydrolysierbaren Trialkoxysilylfunktionen ausgerüsteten Polyetherolen, z.B. Glycerinpolyetherolen, die zunächst via DMC-Katalyse hergestellt, dann durch Zugabe von Alkalialkoholat und Allylchlorid in die entsprechenden Allylether und anschließend durch Platinmetall katalysierte Hydrosilylierung zu den Alkoxysilyl-terminierten Zielprodukten umgesetzt werden.

In der bislang unveröffentlichten Anmeldung DE 10 2008 000360.3 werden Alkoxysilylgruppen tragende Polyether in Gegenwart von Doppelmetallcyanidkatalysatoren, auch als DMC-Katalysatoren bekannt, durch selektive Alkoxylierung von epoxyfunktionellen Alkoxysilanen ausgehend von OH-funktionellen Startern wie Alkoholen, Phenolen oder Polyetherolen hergestellt, ohne dass es unter den Reaktionsbedingungen zu den für diese Stoffgruppe charakteristischen unerwünschten Nebenreaktionen (Kondensations- und Vernetzungsreaktionen) kommt. Die nach diesem Verfahren gewonnenen Produkte stellen vernetzbare Polyether mit wahlweise seiten- oder endständigen reaktiven Alkoxysilylgruppen dar. Derartige in Gegenwart von Feuchtigkeit vernetzbare Polyether eignen sich hervorragend als Klebstoffe und Bindemittel ebenso wie für Beschichtungen und z.B. Dichtstoffe.

Es fehlen bisher Produkte, die die von den Polyethersiloxanen geschätzten tensidischen Eigenschaften mit denen reaktiver, vernetzbarer Alkoxysilylverbindungen auf sich vereinen.

Die durch die Erfindung zu lösende Aufgabe besteht darin, Alkoxysilyl-funktionelle Polyethersiloxane bereit zu stellen, die das Eigenschaftsprofil beider so unterschiedlicher Stoffklassen miteinander kombinieren, die also auf Grund ihrer grenzflächenaktiven Eigenschaften in der Lage sind, zunächst an die jeweilige Grenzfläche des betreffenden Systems zu migrieren, um danach an ihrem gewünschten Bestimmungsort, z.B. auf einer gewünschten Substratoberfläche, über die Alkoxysilylgruppen zur Aushärtung gebracht zu werden. Als Additive zum Beispiel in Klebstoffen, Lacken oder generell Beschichtungsmitteln eingesetzt, eröffnen sie z.B. die Möglichkeit einer intensiven Substratbenetzung mit gleichzeitiger Klebewirkung. Durch Aushärtung ihrer Alkoxysilylgruppen in Anwesenheit von Wasser, wobei schon Luftfeuchtigkeit ausreicht, werden sie anschließend dauerhaft auf der jeweiligen Oberfläche chemisch fixiert. So eignen sie sich als z.B. Primer und Beschichtungsmittel für verschiedenartigste Untergründe, insbesondere wenn letztere mit Alkoxysilylgruppen reagierende funktionelle Gruppen wie OH-Gruppen aufweisen. Alkoxysilylfunktionalisierte Siliconpolyether lassen sich ferner als Spreiter verwenden, die in sehr dünner Schicht auf Oberflächen wie Glas, Metalle, Holz, Mauerwerk oder Kunststoffe aufziehen und nach Hydrolyse der Alkoxysilylgruppen dauerhaft oberflächenmodifizierend dort verankert werden. Je nach ihrem strukturellen Aufbau können sie dabei beispielsweise hydrophobierend wirken oder als Haftvermittler fungieren.

Eine weitere durch die Erfindung zu lösende Aufgabe besteht darin, die tensidischen Eigenschaften der erfindungsgemäßen silylfunktionellen Polyethersiloxane über die Hydrophil-Hydrophob-Balance, also durch Variation von hydrophobem Siloxananteil und hydrophilem Polyetheranteil im Copolymeren, in weiten Grenzen zu steuern, wie es von den herkömmlichen nicht vernetzbaren Polyethersiloxan-Tensiden bekannt ist.

An dieses Ziel knüpft sich die Aufgabe, Verfahren zur Herstellung solcher, beispielsweise tensidisch wirksamer und Alkoxysilylgruppen-tragender Polyethersiloxane zur Verfügung zu stellen, die es gestatten, diesem Anspruch an die strukturelle Vielfalt gerecht zu werden.

Überraschenderweise wurde gefunden, dass Polyethersiloxane mit Hilfe von DMC-Katalysatoren, deren katalytisch aktive Zentren sich durch lewis-saure Eigenschaften auszeichnen, mit Alkoxysilylgruppen tragenden Epoxiden alkoxyliert werden können. Dies ist für den Fachmann keinesfalls selbstverständlich, da lewis-saure Metallverbindungen im Stand der Technik als Vernetzungskatalysatoren für Alkoxysilane verwendet werden.

Weiterhin wurde überraschenderweise gefunden, dass Alkoxysilyl-funktionelle Polyethersiloxane durch eine Edelmetall-katalysierte SiC-Verknüpfung von SiH-Gruppen aufweisenden Wasserstoffsiloxanen mit Alkoxysilylgruppen tragenden ungesättigten Polyethern hergestellt werden können, ohne dass die reaktiven Alkoxysilylgruppen in dieser Hydrosilylierungsreaktion Nebenreaktionen eingehen. Dies ist für den Fachmann nicht vorhersehbar, da die Hydrolyseneigung einer monomeren Alkoxysilylgruppe weitaus größer ist als die Hydrolyseneigung von höhermolekularen Wasserstoffsiloxanen, bei denen bereits Hydrolyse- und Kondensationsreaktionen unter den Reaktionsbedingungen der Hydrosilylierung beobachtet werden.

Damit sind alkoxysilylfunktionelle Polyethersiloxane der Formel (I) und deren Herstellverfahren Gegenstände der vorliegenden Erfindung; wobei die Verbindungen gemäß Formel (I) und deren Mischungen, sind 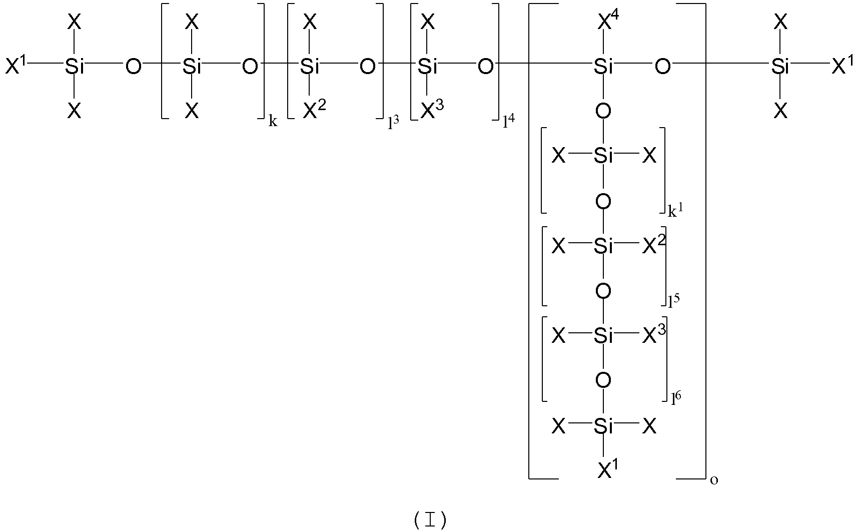 wobei
- X: ein linearer, cyclischer oder verzweigter, aliphatischer oder aromatischer, gesättigter oder ungesättigter Kohlenwasserstoffrest mit 1 bis 20 C-Atomen ist, der ggfs. Heteroatome wie Sauerstoff, Stickstoff, Phosphor oder Schwefel enthalten kann, der jedoch vorzugsweise eine Methylgruppe ist,
- X¹: wahlweise X, X² oder X³ ist,
- X²: ein Alkoxysilylgruppen tragender OH-funktioneller, ggfs. Ester- oder Carbonat-modifizierter Polyoxyalkylenrest der Formel (Ia) - siehe auch Figur 1 - ist, 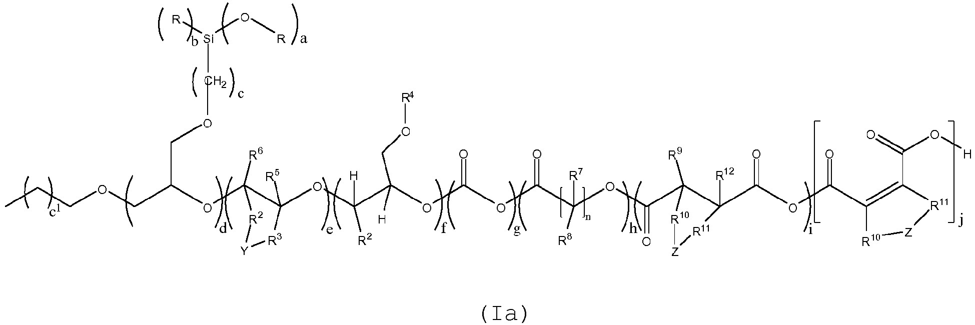
- X³: ein endständig veretherter Polyoxyalkylenrest der Formel (Ib) ist, 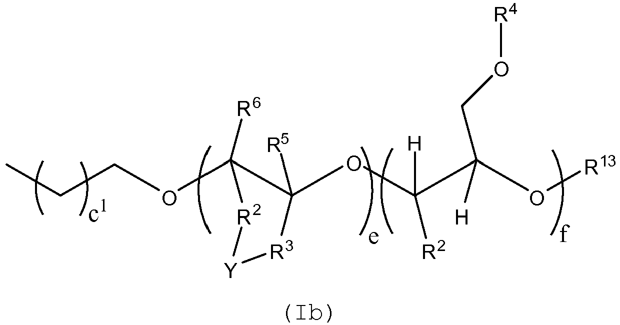
wobei
- R¹³: wahlweise eine Alkylgruppe mit 1 bis 18 C-Atomen, vorzugsweise Methyl ist,
oder ein mit einer monofunktionellen Carbonsäure endständig veresterter Polyoxyalkylenrest der Formel (Ic) ist, 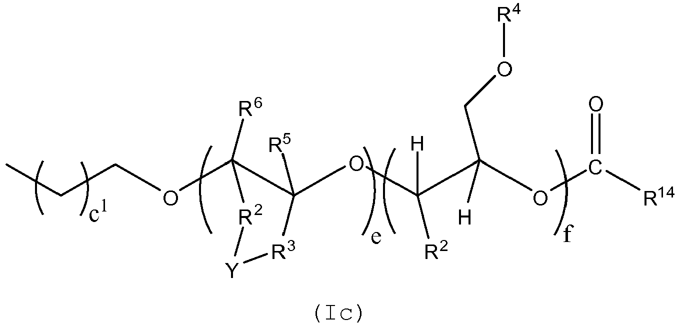
wobei
- R¹⁴: ein gesättigter oder ein ein- oder mehrfach ungesättigter, entweder linearer oder verzweigter, aliphatischer oder aromatischer Kohlenwasserstoffrest mit 1-30 Kohlenstoffatomen ist, der seinerseits OH-Gruppen tragen kann, vorzugsweise ein Methylrest ist,
- X⁴: entweder X¹ oder dem Fragment der Formel (Id) entspricht 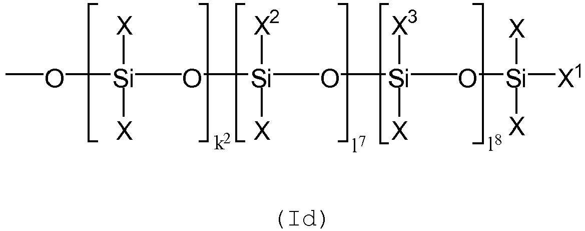
wobei
- k, k¹ und k²: unabhängig voneinander ganze Zahlen von 0 bis 500, vorzugsweise von 10 bis 200, insbesondere 15 bis 100 sind,
- l³, l⁴, l⁵, l⁶, l⁷ und l⁸: unabhängig voneinander ganze Zahlen von 0 bis 60, vorzugsweise von 0 bis 30, insbesondere von 0 bis 25 sind,
- o: eine ganze Zahl von 0 bis 10, vorzugsweise von 0 bis 3 ist, mit der Maßgabe, dass
- X¹: mindestens einmal gleich X² ist, falls die Summe aus l³, l⁵ und l⁷ Null ist, und dass die Summe aus l³, l⁵ und l⁷ mindestens 1 ist, wenn X¹ ungleich X² ist,
wobei
- a: eine ganze Zahl von 1 bis 3, vorzugsweise 3 ist,
- b: eine ganze Zahl von 0 bis 2, vorzugsweise 0 bis 1, besonders bevorzugt 0 ist, die Summe von a und b gleich 3 ist,
- c: eine ganze Zahl von 0 bis 24, vorzugsweise von 0 bis 12, besonders bevorzugt von 0 bis 8, ganz besonders bevorzugt von 0 bis 4 ist,
- c¹: eine ganze Zahl von 0 bis 24, vorzugsweise von 0 bis 12, besonders bevorzugt von 0 bis 8, ganz besonders bevorzugt von 0 bis 4 ist,
- d: eine ganze Zahl von 1 bis 500, bevorzugt 1 bis 100, besonders bevorzugt 1 bis 50 und insbesondere 1 bis 25 ist,
- e: eine ganze Zahl von 0 bis 5000, besonders bevorzugt 0 bis 1000 und insbesondere 0 bis 500 ist,
- n: eine ganze Zahl von 2 bis 8 ist und
- f, g, h, i und j: jeweils ganze Zahlen von 0 bis 500, bevorzugt 0 bis 300, besonders bevorzugt 0 bis 200, insbesondere 0 bis 100 sind,
mit der Maßgabe, dass die Fragmente mit den Indices d bis j untereinander frei permutierbar, d.h. in der Sequenz innerhalb der Polyetherkette gegeneinander austauschbar sind und wobei die verschiedenen Monomereinheiten der Fragmente mit den Indexzahlen d bis j untereinander blockweise aufgebaut sein oder aber auch einer statistischen Verteilung unterliegen können und mit der Maßgabe, dass die Fragmente mit den Indices k, k¹, k², l³, l⁴, l⁵, l⁶, l⁷, l⁸ und o untereinander frei permutierbar, d.h. innerhalb der Siloxankette gegeneinander austauschbar sind und wahlweise statistisch verteilt oder blockartig aneinandergereiht vorliegen können.

R stellt einen oder mehrere gleiche oder verschiedene Reste, ausgewählt aus linearen oder verzweigten, gesättigten, einfach oder mehrfach ungesättigten Alkylresten mit 1 bis 20, insbesondere 1 bis 6 Kohlenstoffatomen oder Halogenalkylgruppen mit 1 bis 20 Kohlenstoffatomen dar, bevorzugt eine Methyl-, Ethyl-, Propyl-, Isopropyl-, n-Butyl- oder sek.-Butylgruppe.

R² oder R³, sowie R⁵ oder R⁶ sind gleich oder unabhängig voneinander H oder ein gesättigter oder gegebenenfalls einfach oder mehrfach ungesättigter, auch weiter substituierter, gegebenenfalls ein- oder mehrwertiger Kohlenwasserstoffrest, wobei für die Reste R⁵ oder R⁶ gilt, dass sie gleich einem einwertigen Kohlenwasserstoffrest sind. Der Kohlenwasserstoffrest kann cycloaliphatisch über das Fragment Y verbrückt sein; Y kann nicht vorhanden sein, oder aber eine Methylenbrücke mit 1 oder 2 Methyleneinheiten sein; ist Y gleich 0, so sind R² oder R³ unabhängig voneinander gleich ein linearer oder verzweigter Rest mit 1 bis 20, bevorzugt 1 bis 10 Kohlenstoffatomen, besonders bevorzugt ein Methyl-, Ethyl-, Propyl- oder Butyl-, Vinyl-, Allylrest oder Phenylrest. Vorzugsweise ist zumindest einer der beiden Reste in R² oder R³ Wasserstoff. Die Kohlenwasserstoffreste R² und R³ können ihrerseits weiter substituiert sein und funktionelle Gruppen wie Halogene, Hydroxylgruppen oder Glycidyloxypropylgruppen tragen.

R⁴ ist ein linearer oder verzweigter Alkylrest von 1 bis 18 Kohlenstoffatomen, der an einen aromatischen oder cycloaliphatischen Rest gebunden sein kann.

R⁷ und R⁸ sind unabhängig voneinander entweder Wasserstoff, Alkyl-, Alkoxy-, Aryl- oder Aralkylgruppen.

R⁹, R¹⁰, R¹¹ und R¹² sind unabhängig voneinander entweder Wasserstoff, Alkyl-, Alkenyl-, Alkoxy-, Aryl- oder Aralkylgruppen, wobei der Kohlenwasserstoffrest cycloaliphatisch oder aromatisch über das Fragment Z verbrückt sein, wobei Z sowohl einen divalenten Alkylenals auch Alkenylenrest darstellen kann.

Die durch Formel (I) beschriebenen Polyethersiloxane schließen die gegebenenfalls prozessbedingt enthaltenen Nebenprodukte wie freie Überschusspolyether oder Umlagerungsprodukte mit ein.

Die verschiedenen Monomereinheiten innerhalb der Siloxankette bzw. innerhalb der damit verknüpften Polyetherkette können untereinander wahlweise blockweise oder statistisch aufgebaut sein. Die in den hier angeführten Formeln wiedergegebenen Indexzahlen und die Wertebereiche der angegebenen Indizes verstehen sich als die Mittelwerte der möglichen statistischen Verteilung der tatsächlichen isolierten Strukturen und/oder deren Mischungen. Dies gilt auch für als solche an sich exakt wiedergegebenen Strukturformeln.
Die Polyethersiloxane mit Alkoxysilylfunktionalisierung der Formel (I) stellen zumeist kammartig verzweigte Copolymere dar, in denen die Polyetherketten jeweils über SiC-Bindungen an das Polysiloxangrundgerüst gebunden sind.

Ebenfalls erfindungsgemäß sind lineare Polyether-Siloxan-Polyether-Triblockcopolymere der Formel (II), bei denen die mit Alkoxysilylgruppen ausgestatteten Polyetherketten über eine Si-O-C-Verknüpfung an den Siloxankörper gebunden sind, 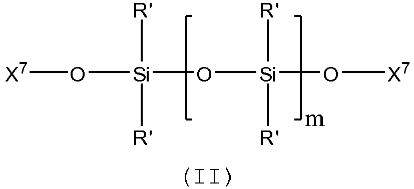 wobei
- R': einem oder mehreren gleichen oder verschiedenen linearen oder verzweigten, gesättigten, einfach oder mehrfach ungesättigten Alkylresten mit 1 bis 20, insbesondere 1 bis 10 Kohlenstoffatomen entspricht,
und
- m: eine ganze Zahl von 0 bis 5000, bevorzugt 2 bis 5000, besonders bevorzugt von 5 bis 4000 ist und insbesondere 9 bis 3000 ist, und
- X⁷: dem Polyetherfragment der Formel (IIa) - siehe auch Figur 2 - entspricht.

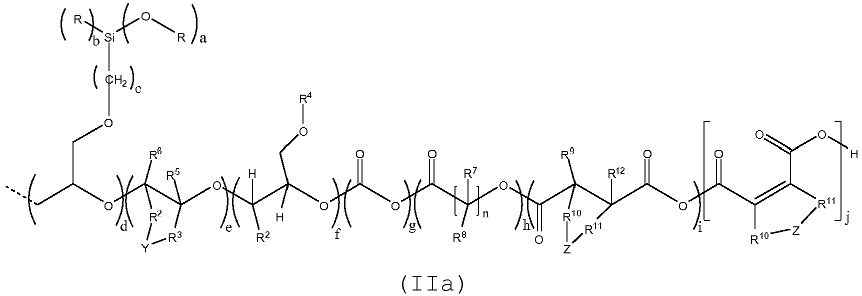

Die Substituenten R, R²-R¹², die Reste Y und Z sowie die Indizes a, b, c, d, e, f, g, h, i, j und n entsprechen den zuvor für die Verbindungen der Formel (Ia) genannten Definitionen.

Die in den Formeln (I) bis (Id) und (II) sowie (IIa) wiedergegebenen Indexzahlen und die Wertbereiche der angegebenen Indizes verstehen sich als die Mittelwerte der möglichen statistischen Verteilung der tatsächlichen vorhandenen Strukturen und/oder deren Mischungen.

Weiterhin Gegenstand der Erfindung sind die im Folgenden genannten Verfahren zur Herstellung von alkoxysilylfunktionellen Polyethersiloxanen, die unter Erhalt des Siloxangerüsts verlaufen.

Alkoxysilylfunktionelle Polyethersiloxane und deren Mischungen lassen sich nach zwei verschiedenen Verfahren herstellen:
1) Alkoxylierung von Siliconpolyethercopolymeren bzw. Polysiloxanen mit epoxyfunktionellen Alkoxysilanen an Doppelmetallcyanid-Katalysatoren
   und/oder
2) Hydrosilylierende Verknüpfung von ungesättigten Alkoxysilylgruppen tragenden Polyethern, die zuvor durch eine Alkoxylierung der entsprechenden ungesättigten Startverbindungen mit epoxyfunktionellen Alkoxysilanen an DMC-Katalysatoren gewonnen wurden.

Beide Verfahren können unabhängig voneinander, aber auch beliebig nacheinander geschaltet durchgeführt werden.

Die beiden Verfahren sollen im Nachfolgenden eingehend beschrieben werden.

### 1) Alkoxylierung von Siliconpolyethercopolymeren bzw. Polysiloxanen mit epoxyfunktionellen Alkoxysilanen an Doppelmetallcyanid-Katalysatoren

Die DMC-katalysierte Alkoxylierung von Polyethersiloxanen und deren zum Beispiel Überschusspolyether, Umlagerungsprodukte oder sonstige Nebenprodukte enthaltende Mischungen, zuvor hergestellt über die Methode der Hydrosilylierung, wird bereits in der nicht vorveröffentlichten Schrift DE 10 2008 043245.8 beschrieben. Es wurde nun gefunden, dass nicht nur beispielsweise Alkylenoxide, Lactone oder z.B. cyclische Anhydride an die OH-Gruppen aufweisenden Siloxangebundenen oder freien Polyether der als Startverbindungen fungierenden Polyethersiloxansysteme unter Ringöffnung addiert werden können, sondern sogar epoxyfunktionelle Alkoxysilane der Formel (III), 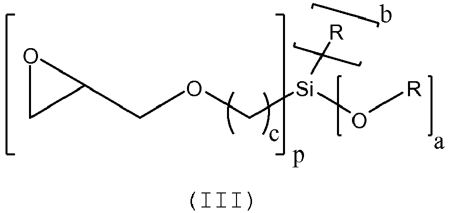 wobei
die Indizes a, b und c sowie der Rest R die bei Formel (Ia) definierten Bedeutungen haben und p eine ganze Zahl ist, die der Differenz aus 4-a-b entspricht.

Die epoxyfunktionellen Verbindungen, Lactone, Glycidylverbindungen und/oder cyclischen Anhydride können allein oder auch in beliebigen Mischungen miteinander eingesetzt werden.

Eine nicht abschließende Sammlung solcher Epoxidgruppensubstituierter Alkoxysilane gemäß der Formel (III) umfasst zum Beispiel 3-Glycidyloxypropyltrimethoxysilan, 3-Glycidyloxypropyltriethoxysilan, 3-Glycidyloxypropyltripropoxysilan, 3-Glycidyloxypropyltriisopropoxysilan, Bis(3-Glycidyloxypropyl)dimethoxysilan, Bis(3-Glycidyloxypropyl)diethoxysilan, 3-Glycidyloxyhexyltrimethoxysilan, 3-Glycidyloxyhexyltriethoxysilan, 3-Glycidyloxypropyl-methyl-dimethoxysilan, 3-Glycidyloxypropyl-ethyl-diethoxysilan. Ganz besonders bevorzugt sind Verbindungen der Formel (III) mit p gleich 1.

Die erfindungsgemäße Alkoxylierung ist dabei so selektiv, dass das Siloxangerüst erhalten bleibt und die für Silanverbindungen charakteristischen Hydrolyse- und Vernetzungsreaktionen vermieden werden. Die Verwendung von epoxyfunktionellen Alkoxysilanen als Monomere in der Alkoxylierung mittels DMC-Katalyse ist bislang nur ausgehend von rein organischen Kettenstartern wie Alkoholen, Polyetherolen und phenolischen Komponenten bekannt und in der nicht vorveröffentlichten Schrift DE 10 2008 000360.3 ausgeführt.

Die epoxyfunktionellen Alkoxysilane der Formel (III) können bei der DMC-katalysierten Alkoxylierung zur Herstellung vernetzbarer Polyethersiloxane nach Bedarf in beliebiger Dosierreihenfolge nacheinander oder im Gemisch mit Alkylenoxiden der allgemeinen Formel (IV) eingesetzt werden, 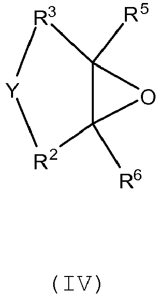 mit R² oder R³, sowie R⁵ oder R⁶ gleich oder auch unabhängig voneinander H oder ein gesättigter oder gegebenenfalls einfach oder mehrfach ungesättigter, auch weiter substituierter, gegebenenfalls ein- oder mehrwertiger Kohlenwasserstoffrest, wobei für die Reste R⁵ oder R⁶ gilt, dass sie gleich einem einwertigen Kohlenwasserstoffrest sind. Der Kohlenwasserstoffrest kann cycloaliphatisch über das Fragment Y verbrückt sein; Y kann nicht vorhanden sein, oder aber eine Methylenbrücke mit 1 oder 2 Methyleneinheiten sein, ist Y gleich 0, so sind R² oder R³ unabhängig voneinander gleich ein linearer oder verzweigter Rest mit 1 bis 20, bevorzugt 1 bis 10 Kohlenstoffatomen, besonders bevorzugt ein Methyl-, Ethyl-, Propyl- oder Butyl-, Vinyl-, Allylrest oder Phenylrest. Vorzugsweise ist zumindest einer der beiden Reste in Formel (IV) R² oder R³ Wasserstoff. Besonders bevorzugt werden als Alkylenoxide Ethylenoxid, Propylenoxid, 1,2- oder 2,3-Butylenoxid, Isobutylenoxid, 1,2-Dodecenoxid, Styroloxid, Cyclohexenoxid (hier ist R²-R³ eine-CH₂CH₂CH₂CH₂-Gruppe, Y damit -CH₂CH₂-) oder Vinylcyclohexenoxid oder deren Mischungen eingesetzt. Die Kohlenwasserstoffreste R² und R³ gemäß Formel (IV) können ihrerseits weiter substituiert sein und funktionelle Gruppen wie Halogene, Hydroxylgruppen oder Glycidyloxypropylgruppen tragen. Zu solchen Alkylenoxiden gehören Epichlorhydrin und 2,3-Epoxy-1-propanol.

Ebenfalls können Glycidylverbindungen wie Glycidylether und/oder Glycidylester der allgemeinen Formel (V), 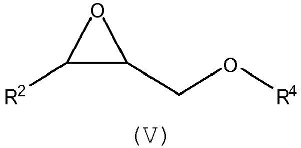 bei denen mindestens eine Glycidyloxypropyl-Gruppe über eine Ether- oder Esterfunktion an einen linearen oder verzweigten Alkylrest R⁴ von 1 bis 24 Kohlenstoffatomen, einen aromatischen oder cycloaliphatischen Rest gebunden ist, in Kombination mit den in Formel (III) dargestellten epoxidfunktionellen Alkoxysilanen und gegebenenfalls zusätzlich zu den Alkylenoxiden der Formel (IV) verwendet werden. Zu dieser Klasse von Verbindungen gehören zum Beispiel Allyl-, Butyl-, 2-Ethylhexyl-, Cyclohexyl-, Benzyl-, C₁₂/C₁₄-Fettalkohol-, Phenyl-, p-tert.-Butylphenyl-oder o-Kresylglycidylether. Bevorzugt eingesetzte Glycidylester sind zum Beispiel Glycidylmethacrylat, Glycidylacrylat oder Neodecansäureglycidylester. Ebenso einsetzbar sind polyfunktionelle Epoxidverbindungen wie zum Beispiel 1,2-Ethyl-, 1,4-Butyl- oder 1,6-Hexyldiglycidylether.

Die erfindungsgemäß einsetzbaren Epoxidgruppen tragenden Alkoxysilane der Formel (III) können - gegebenenfalls in Kombination mit weiteren Epoxiden gemäß Formel (IV) und (V) - unter den Bedingungen der DMC-katalysierten Alkoxylierung auch im Gemisch mit Lactonen der Formel (VI), 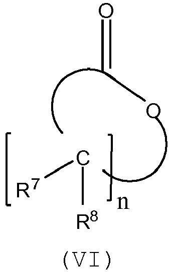 wobei
n eine ganze Zahl von 2 bis 8 ist, und
R⁷ und R⁸ unabhängig voneinander entweder Wasserstoff, Alkyl-, Alkoxy-, Aryl- oder Aralkylgruppen darstellen, unter Ringöffnungspolymerisation zu vernetzbaren, Alkoxysilangruppen enthaltenden Polyethersiloxanen mit Esterfunktionen in den Polyetherfragmenten copolymerisiert werden. Als geeignete Lactone können in dem Zusammenhang beispielsweise ε-Caprolacton, 5-Valerolacton und γ-Butyrolacton sowie Gemische verschiedener Lactone verwendet werden. Bevorzugt ist die Verwendung von ε-Caprolacton als Comonomer. Während des Alkoxylierungsprozesses können die jeweiligen Epoxid- und Lactonmonomere in beliebiger Reihenfolge und variabler Menge nacheinander oder zeitlich parallel zu Polyetherestern mit blockartiger oder statistisch verteilter Sequenz der einzelnen Monomerbausteine copolymerisiert werden.

Alternativ oder zusätzlich zu Lactonen können auch gesättigte, ungesättigte oder aromatische cyclische Dicarbonsäureanhydride gemäß den Formeln (VII) und (VIII) als Comonomere neben den erfindungsgemäß einsetzbaren Epoxidgruppen tragenden Alkoxysilanen der Formel (III) und gegebenenfalls weiteren Epoxiden gemäß Formel (IV) und (V) unter den Bedingungen der DMC-katalysierten Alkoxylierung eingesetzt werden, 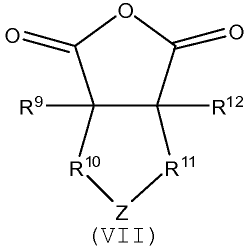 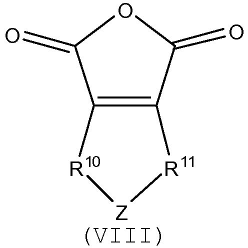 wobei R⁹, R¹⁰, R¹¹ und R¹² unabhängig voneinander entweder Wasserstoff, Alkyl-, Alkenyl-, Alkoxy-, Aryl- oder Aralkylgruppen darstellen. Der Kohlenwasserstoffrest kann cycloaliphatisch oder aromatisch über das Fragment Z verbrückt sein, wobei Z sowohl einen divalenten Alkylenals auch Alkenylenrest darstellen kann. Bevorzugt eingesetzte cyclische Anhydride sind Bernsteinsäureanhydrid, Oct(en)yl-, Dec(en)yl- und Dodec(en)ylbernsteinsäueanhydrid, Maleinsäureanhydrid, Phthalsäureanhydrid, Hexahydro-, Tetrahydro-, Dihydro-, Methylhexahydro- und Methyltetrahydrophthalsäureanhydrid. Während des Alkoxylierungsprozesses können die jeweiligen Anhydridmonomere in beliebiger Reihenfolge und variabler Menge nacheinander oder zeitlich parallel zum Epoxidfeed unter Ringöffnung zu Polyetherestern copolymerisiert werden. Auch Mischungen von Anhydriden gemäß Formel (VII) und (VIII) sind einsetzbar.

Wird die Alkoxylierung von epoxyfunktionellen Alkoxysilanen - gegebenenfalls in Anwesenheit von weiteren Epoxidverbindungen oder Comonomeren - in Gegenwart von Kohlendioxid durchgeführt, gelingt die Herstellung carbonatgruppen-modifizierter Polyether- bzw. Polyetherester-substituierter Polyethersiloxane durch Insertion von Kohlendioxid in die Polyetherkette. Solche Umsetzungen finden bevorzugt in Autoklavreaktoren unter Überdruck und Kohlendioxidbeaufschlagung statt. Der Carbonatgehalt ist variabel und z.B. durch die Wahl der Temperatur- und Druckbedingungen während der Umsetzung steuerbar.

Als Kettenstarter eignen sich SiC-verknüpfte Polyethersiloxane der Formel (IX) und deren Gemische, die großtechnisch zumeist durch Edelmetall-katalysierte Hydrosilylierungsreaktionen der entsprechenden Wasserstoffsiloxane mit terminal ungesättigten, zum Beispiel Allylalkohol-basierenden Polyethern hergestellt werden und die mindestens eine am Polyetherfragment gebundene Hydroxylgruppe aufweisen. Derartige Polyether werden in einem separaten vorherigen Alkoxylierungsprozess nach Stand der Technik durch meist alkalisch, sauer oder DMC-katalysierte Alkoxylierung von Allylalkohol mit Alkylenoxiden und evtl. zusätzlichen Monomeren hergestellt. 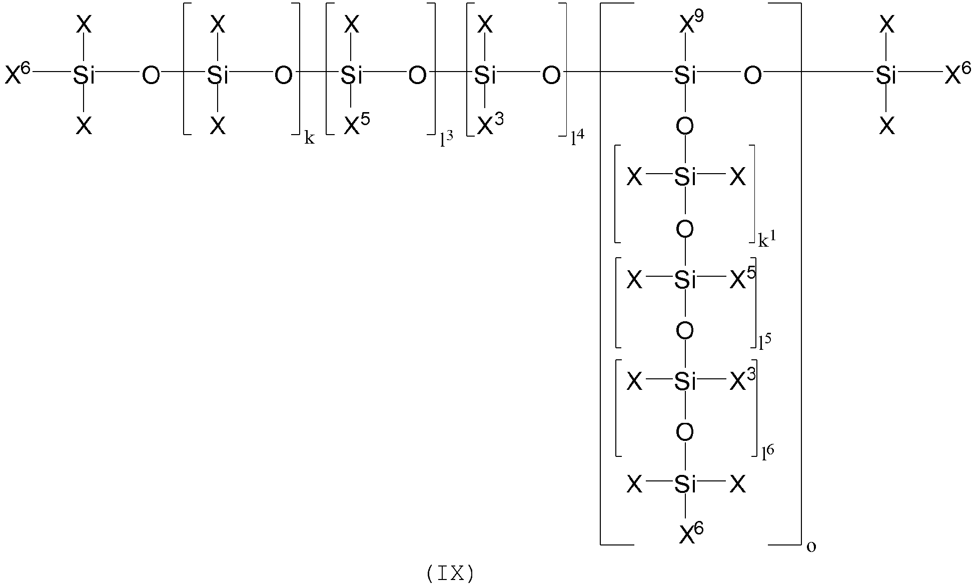 wobei
X⁶ wahlweise X, X³ oder X⁵ ist,
X⁹ wahlweise X⁶ oder dem Fragment der Formel (IXd) entspricht, 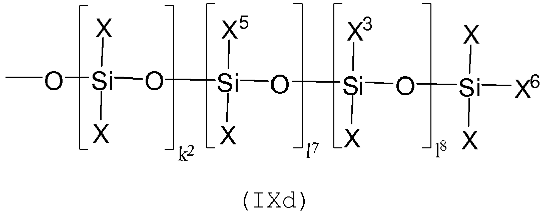
X⁵ ein OH-funktioneller, ggfs. Ester- oder Carbonat-modifizierter Polyoxyalkylenrest der Formel (IXa) ist, 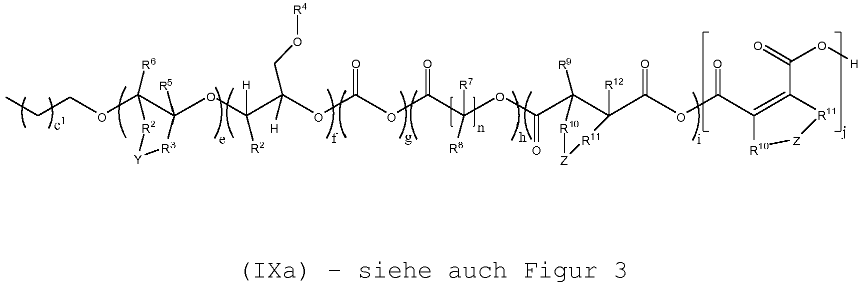
wobei die Indizes k, k¹, k², l³, l⁴, l⁵, l⁶, l⁷, l⁸ und o, c¹, e, f, g, h, i, j und n sowie die Fragmente X, X³ ebenso wie die Reste R² bis R¹⁴ sowie Y und Z die zuvor bei Formel (I) bzw. (Ia) genannten Bedeutungen haben,
mit den Maßgaben, dass
die Fragmente mit den Indices e, f, g, h, i und j in der Polyetherkette und mit den Indizes k, k¹, k², l³, l⁴, l⁵, l⁶, l⁷, l⁸ und o im Siloxangerüst untereinander frei permutierbar, d.h. in der Sequenz innerhalb der Kette gegeneinander austauschbar sind und untereinander blockweise oder statistisch verteilt vorliegen können, die durch Formel (IX) beschriebenen Polyethersiloxane die gegebenenfalls prozessbedingt enthaltenen Nebenprodukte wie freie Überschusspolyether oder Umlagerungsprodukte mit einschließen und
die numerischen Werte von e, f, g, h, i und j kleiner oder gleich den Werten dieser Indizes in Formel (Ia) sind.

Im einfachsten Fall werden Siliconpolyether der Formel (IX) nach erfindungsgemäßem Verfahren in Gegenwart eines DMC-Katalysators an den OH-Termini der kamm- oder seitenständigen Polyoxyalkylenketten durch Addition von mindestens einem epoxyfunktionellen Alkoxysilan der Formel (III) pro Molekül der Formel (IX) kettenverlängert, also damit Polyether-endständig um mindestens eine vernetzbare Alkoxysilylgruppe erweitert. Sind in einem technischen Polyethersiloxan freie, nicht ans Siloxangerüst gebundene OH-funktionelle Polyether im Gemisch des Kettenstarters vorhanden, so werden auch diese unter den Reaktionsbedingungen alkoxysilylfunktionalisiert.

Zu Endprodukten größerer Reinheit gelangt man nach dem erfindungsgemäßen Verfahren durch Verwendung von Siloxanen, die durch Hydrosilylierung mit niedermolekularen hydroxyfunktionellen ungesättigten Verbindungen funktionalisiert sind und die durch anschließende Destillation von den isomerisierten Überschußanteilen befreit worden sind. Verwendet man diese hochreinen Siloxane als Starter in der Alkoxylierung, so erhält reine alkoxysilylfunktionelle Polyethersiloxane ohne siloxanfreie Nebenbestandteile.

Das erfindungsgemäß beanspruchte Verfahren gewährt die synthetische Freiheit Silanole, beispielsweise auch lineare Polydimethylsiloxandiole bzw. darauf basierende SiOC-verknüpfte Polyethersiloxane der Formel (X) in Gegenwart eines DMC-Katalysators mit epoxyfunktionellen Alkoxysilanen und gegebenenfalls weiteren Monomeren zu Silylgruppen tragenden Polyethersiloxanen der Formel (II) umzusetzen, 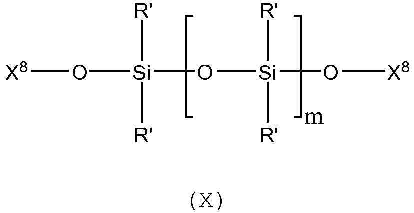 wobei
R' und m der Bedeutung in Formel (II) entsprechen und
X⁸ entweder Wasserstoff ist oder dem Polyetherfragment der Formel (Xa) entspricht, 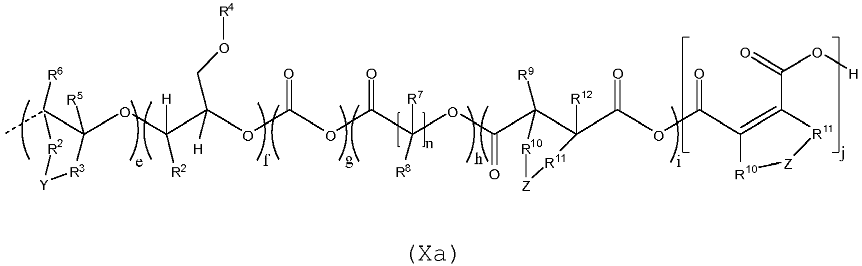 wobei
   die Indizes e, f, g, h, i, j und n sowie die Reste R² bis R¹² sowie Y und Z die zuvor bei Formel (II) genannten Bedeutungen haben, mit den Maßgaben, dass
   die Fragmente mit den Indices e, f, g, h, i und j in der Polyetherkette untereinander frei permutierbar, d.h. in der Sequenz innerhalb der Kette gegeneinander austauschbar sind und untereinander blockweise oder statistisch verteilt vorliegen können,
   die durch Formel (X) beschriebenen Polyethersiloxane die gegebenenfalls prozessbedingt enthaltenen Nebenprodukte wie Umlagerungsprodukte mit einschließen und
   die numerischen Werte von e, f, g, h, i und j kleiner oder gleich den Werten dieser Indizes in Formel (II) sind.

Vor allem kurzkettige kommerziell erhältliche Silanole gemäß Formel (X) mit X⁸ = H können durch Kondensation entstandene cyclische Siloxanspezies wie Octamethylcyclotetrasiloxan und Decamethylcyclopentasiloxan als Nebenbestandteile enthalten. Diese Siloxancyclen tragen keine reaktiven SiOH-Gruppen, verhalten sich also im Sinne der erfindungsgemäßen Alkoxylierungsreaktion in Gegenwart von DMC-Katalysatoren inert. Je nach Bedarf oder Anwendungsgebiet der angestrebten Alkoxylierungsprodukte können solche ggfs. enthaltenen cyclischen Siloxanverbindungen entweder im System verbleiben oder z.B. durch eine einfache Vakuumdestillation ganz oder teilweise entfernt werden. Die Abdestillation cyclischer Siloxanspezies kann dabei wahlweise vor der Alkoxylierung oder nach Beendigung der Alkoxylierung erfolgen.

Insbesondere kurzkettige großtechnisch hergestellte Silanole der Formel (X) können geringe Konzentrationen von Wasser als weiteres typisches Kondensationsprodukt enthalten. Sollte die Wasserkonzentration außergewöhnlich hohe Werte von z.B. über 0,3 % im Silanol erreichen, kann es von Vorteil sein, Wasser zumindest teilweise per Vakuumdestillation vor der DMC-Katalysatorzugabe und vor dem Start der Alkoxylierung aus dem Silanol-Starter zu entfernen, da es sich nicht nur inhibierend auf die katalytische Aktivität des Doppelmetallcyanids auswirken kann, sondern auch Hydrolyse- und damit ungewollte Vernetzungsreaktionen der Alkoxysilylgruppen schon während der Alkoxylierung auslösen kann. Wünschenswert ist ein möglichst geringer Wassergehalt im SilandiolStarter. Vorteilhaft im Sinne eines raschen Reaktionsstarts und zur Vermeidung jeglicher Hydrolyserisiken in der Alkoxylierung ist es, evtl. im Silandiolstarter enthaltenes Wasser vor der Zugabe des DMC-Katalysators und der epoxyfunktionellen Alkoxysilane destillativ zu entfernen.

Verbindungen der Formeln (IX) und (X) können auch im beliebigen Gemisch gemeinsam mit epoxyfunktionellen Alkoxysilanen und ggf. weiteren Monomeren nach erfindungsgemäßem Verfahren alkoxyliert werden.

Die für das erfindungsgemäß beanspruchte Verfahren eingesetzten Doppelmetallcyanidkatalysatoren (DMC-Katalysatoren) sind in ihrer Herstellung und Verwendung als Alkoxylierungskatalysatoren seit den 1960er Jahren bekannt und werden zum Beispiel in US 3,427,256, US 3,427,334, US 3,427,335, US 3,278,457, US 3,278,458 oder US 3,278,459 dargestellt. Unter den in den Folgejahren weiter entwickelten und z.B. in US 5,470,813 und US 5,482,908 beschriebenen, immer wirksameren Typen von DMC-Katalysatoren befinden sich im speziellen Zink-Cobalt-Hexacyanokomplexe. Dank ihrer außerordentlich hohen Aktivität werden zur Herstellung von Polyetherolen nur geringe Katalysatorkonzentrationen benötigt, so dass auf die für konventionelle alkalische Katalysatoren notwendige Aufarbeitungsstufe - bestehend aus der Neutralisation, der Fällung und der Abfiltration des Katalysators - am Ende des Alkoxylierungsprozesses verzichtet werden kann.

Der Stand der Technik referiert verschiedene Alkoxylierungsverfahren, die sich der Katalyse mit Doppelmetallcyanid-Katalysatoren bedienen. Als Referenz sei hier z. B. auf EP-A1-1 017 738, US 5,777,177, EP-A1-0 981 407, WO 2006/002807 und EP-A1-1 474 464 verwiesen.

Zum Starten der Alkoxylierungsreaktion nach erfindungsgemäßem Verfahren wird das Startgemisch, bestehend aus einem oder mehreren OH-funktionellen Startverbindungen der Formel (IX) oder (X) oder deren Mischungen und dem Doppelmetallcyanid-Katalysator, der gegebenenfalls zuvor in einem Suspendiermittel aufgeschlämmt wurde, im Reaktor vorgelegt. Als Suspensionsmittel können entweder ein Polyether oder inerte Lösungsmittel benutzt werden oder vorteilhaft auch eine oder mehrere Startverbindungen, oder alternativ ein Gemisch aus diesen Komponenten. Der vorgelegten Startmischung wird zumindest eine der Epoxidverbindungen gemäß Formel (III), (IV) oder (V) zudosiert. Zum Starten der Alkoxylierungsreaktion und zur Aktivierung des Doppelmetallcyanid-Katalysators wird zunächst meist nur ein Teil der insgesamt zu dosierenden Menge an Epoxid zugefügt. Das molare Verhältnis von Epoxid zu den reaktiven Gruppen des Starters, insbesondere den OH-Gruppen im Startgemisch, liegt in der Startphase dabei vorzugsweise bei 0,1 bis 100 zu 1, bevorzugt bei 0,2 bis 60 zu 1, insbesondere bei 0,4 bis 40 zu 1. Es kann vorteilhaft sein, wenn vor der Zugabe des Epoxids gegebenenfalls vorhandene, die Reaktion inhibierende Stoffe und insbesondere Wasser aus dem Reaktionsgemisch z.B. durch Destillation entfernt werden.

Das Starten der exothermen Reaktion kann z.B. durch eine Druck- und/oder Temperaturüberwachung detektiert werden. Ein plötzlicher Abfall des Drucks im Reaktor zeigt bei gasförmigen Alkylenoxiden an, dass das Alkylenoxid eingebaut wird, die Reaktion somit gestartet und das Ende der Startphase erreicht ist. Bei nicht gasförmigen Glycidylethern/-estern oder epoxyfunktionellen Alkoxysilanen wird das Anspringen der Reaktion durch die einsetzende Wärmetönung angezeigt.
Nach der Startphase, also nach Initialisierung der Reaktion, werden je nach angestrebter Molmasse entweder gleichzeitig weitere Startverbindung und weiteres Epoxid oder nur weiteres Epoxid zudosiert. Alternativ kann auch ein beliebiges Gemisch von unterschiedlichen Epoxiden der Formeln (III), (IV) und (V) addiert werden. Die erfindungsgemäß einsetzbaren Epoxidmonomere gemäß den Formeln (III), (IV) oder (V) können auch in beliebiger Reihenfolge nacheinander addiert werden. Die Umsetzung kann z.B. zwecks Viskositätserniedrigung des Reaktionsgemisches in einem inerten Lösemittel durchgeführt werden. Als inerte Lösungsmittel eignen sich Kohlenwasserstoffe, insbesondere Toluol, Xylol oder Cyclohexan.
In den erfindungsgemäßen Produkten beträgt das molare Verhältnis der Summe der dosierten Epoxide, inklusive der bereits in der Startphase zugefügten Epoxide, bezogen auf die eingesetzte Startverbindung, insbesondere bezogen auf die Anzahl der OH-Gruppen der eingesetzten Startverbindung, dabei vorzugsweise 1 bis 10⁴ zu 1, insbesondere 1 bis 10³ zu 1.

Die Anlagerung der Epoxidverbindungen geschieht vorzugsweise bei einer Temperatur von 60 bis 250 °C, besonders bevorzugt bei einer Temperatur von 90 bis 160 °C. Der Druck, bei dem die Alkoxylierung stattfindet, beträgt vorzugsweise 0,02 bar bis 100 bar, besonders bevorzugt 0,05 bis 20 bar und insbesondere von 0,2 bis 2 bar absolut. Durch die Durchführung der Alkoxylierung bei Unterdruck kann die Reaktion sehr sicher durchgeführt werden. Gegebenenfalls kann die Alkoxylierung in Gegenwart eines Inertgases (z.B. Stickstoff) oder - zur Herstellung von Polyethercarbonaten - in Gegenwart von Kohlendioxid auch bei einem Überdruck von dann vorzugsweise 1 bis 20 bar absolut durchgeführt werden.

Die für die Herstellung von estermodifizierten Polyethern einsetzbaren Lactone (VI) oder cyclischen Anhydride (VII) und (VIII) können sowohl bereits in der Startphase dem Starter-Katalysator-Gemisch zugefügt als auch zu einem späteren Zeitpunkt parallel zur Epoxiddosierung zugeführt werden. Die genannten Comonomere können auch jeweils nacheinander alternierend mit Epoxiden in den Reaktor dosiert werden.
Das molare Verhältnis der Epoxidmonomere zu cyclischen Anhydriden ist dabei variabel. Üblicherweise werden mindenstens äquimolare Mengen Epoxidmonomere bezogen auf Anhydride eingesetzt. Bevorzugt ist die Verwendung der Epoxide in einem molaren Überschuss, um die vollständige Anhydridumsetzung zu gewährleisten.
Lactone können während der Alkoxylierung wahlweise im stöchiometrischen Unterschuss oder Überschuss bezogen auf die Epoxidmonomere zugefügt werden.

Zur Herstellung von carbonatmodifizierten, Silylgruppen tragenden Polyethersiloxanen findet die Alkoxylierung in Gegenwart von entweder gasförmig oder als Trockeneis zugeführtem festen Kohlendioxid statt. Vorzugsweise wird Kohlendioxidgas verwendet, das sowohl bereits vor dem Start der Reaktion, also bereits während der Initialisierungsstufe, dem System aus Starter und DMC-Katalysator zugeführt werden kann, als auch während der nachfolgenden Phase des Zulaufs von Epoxidmonomeren und evtl. weiterer Comonomere. Um den Carbonatgehalt im Endprodukt zu erhöhen, ist es vorteilhaft, entsprechend dem Kohlendioxidverbrauch, erkennbar an der Druckabnahme im Autoklaven, im Verlaufe der Umsetzung weiteres Kohlendioxid kontinuierlich oder portionsweise zuzudosieren. Vorzugsweise geschieht die Reaktion bei Drücken von weniger als 100 bar, besonders bevorzugt bei weniger als 20 bar.

Nach der Monomer-Addition und eventueller Nachreaktion zur Vervollständigung des Monomerumsatzes werden evtl. vorhandene Reste von nicht abreagiertem Monomer und eventuell weiteren leicht flüchtigen Bestandteilen, üblicherweise durch Vakuumdestillation, Gasstrippen oder andere Methoden der Desodorierung entfernt. Die Entfernung leichtflüchtiger Nebenkomponenten kann sowohl batchweise als auch kontinuierlich erfolgen. Beim erfindungsgemäßen Verfahren auf Basis der DMC-Katalyse kann im Normalfall auf eine Filtration verzichtet werden.

Die Verfahrensschritte können bei identischen oder verschiedenen Temperaturen ausgeführt werden. Die im Reaktor zum Reaktionsstart vorgelegte Mischung aus Startsubstanz, DMC-Katalysator und gegebenenfalls Suspensionsmittel kann vor Beginn der Monomerdosierung gemäß der Lehre von WO 98/52689 durch Strippen vorbehandelt werden. Dabei wird über die Reaktorzuführung ein Inertgas dem Reaktionsgemisch zugemischt und mit Hilfe einer an das Reaktorsystem angeschlossenen Vakuumanlage werden leichter flüchtige Komponenten durch Anlegen eines Unterdrucks aus dem Reaktionsgemisch entfernt. Auf diese einfache Weise können aus dem Reaktionsgemisch Stoffe, die den Katalysator inhibieren können, wie z. B. niedere Alkohole oder Wasser, entfernt werden. Die Zugabe von Inertgas und das gleichzeitige Entfernen der leichter flüchtigen Komponenten kann insbesondere beim Anfahren/Starten der Reaktion von Vorteil sein, da durch die Zugabe der Reaktanden oder durch Nebenreaktionen auch inhibierende Verbindungen in das Reaktionsgemisch gelangen können.

Als DMC-Katalysator können alle bekannten DMC-Katalysatoren, vorzugsweise solche, die Zink und Kobalt aufweisen, bevorzugt solche, die Zinkhexacyanocobaltat (III) aufweisen, eingesetzt werden. Vorzugsweise werden die in US 5,158,922, US 2003-0119663, WO 01/80994 oder in den oben genannten Schriften beschriebenen DMC-Katalysatoren eingesetzt. Die Katalysatoren können amorph oder kristallin sein.
Im Reaktionsgemisch liegt die Katalysatorkonzentration vorzugsweise bei > 0 bis 1.000 wppm (Massen-ppm), bevorzugt bei > 0 bis 300 wppm, besonders bevorzugt bei 0,1 bis 200 wppm und ganz besonders bevorzugt bei 1 bis 50 wppm. Diese Konzentration ist dabei bezogen auf die Gesamtmasse der entstehenden alkoxysilyl-modifizierten Polyethersiloxane.
Vorzugsweise wird der Katalysator nur einmal in den Reaktor dosiert. Die Katalysatormenge ist so einzustellen, dass eine ausreichende katalytische Aktivität für das Verfahren gegeben ist. Der Katalysator kann als Feststoff oder in Form einer Katalysatorsuspension dosiert werden. Wird eine Suspension verwendet, so eignet sich insbesondere der Starter der Formel (IX) oder (X) als Suspensionsmittel. Bevorzugt wird aber auf eine Suspendierung verzichtet.

Bei der Dosierung der Edukte ist eine gute Verteilung der an der chemischen Umsetzung beteiligten Stoffe, d.h. der Epoxidmonomere, Starter, DMC-Katalysator und gegebenenfalls Suspensionsmittel oder Comonomere wie Lactone, Anhydride oder Kohlendioxid notwendig.

Als Reaktoren für die erfindungsgemäß beanspruchte Umsetzung können prinzipiell alle geeigneten Reaktortypen zum Einsatz kommen, die die Reaktion und ihre eventuell vorhandene Wärmetönung beherrschen lassen. Die Reaktionsführung kann in verfahrenstechnisch bekannter Art und Weise kontinuierlich, semi-kontinuierlich oder auch batchweise erfolgen und lässt sich flexibel auf die vorhandenen produktionstechnischen Einrichtungen abstimmen. Neben herkömmlichen Rührkesselreaktoren können auch Strahlschlaufenreaktoren mit Gasphase und internen Wärmetauscherrohren, wie in WO 01/062826 beschrieben, verwendet werden. Darüber hinaus können gasphasenfreie Loop-Reaktoren eingesetzt werden.

### 2) Hydrosilylierende Verknüpfung von ungesättigten Alkoxysilylgruppen tragenden Polyethern an Wasserstoffsiloxane

Nach Stand der Technik werden SiC-verknüpfte Polyethersiloxan-Copolymere durch eine Hydrosilylierungsreaktion unter Addition SiH-Gruppen aufweisender Siloxane an ungesättigte Polyether wie z.B. an Derivate des Vinyl- oder Allylalkohols durchgeführt. Aus der großen Zahl von Schriften seien genannt EP 1 520 870, EP 0 075 703, US 3 775 452 und EP 1 031 603.

Als ungesättigte Polyether dienen dabei bisher Alkoxylierungsprodukte auf Basis von Alkylenoxiden wie Ethylenoxid und Propylenoxid, ganz selten auch auf Basis anderer Epoxidverbindungen oder Comonomerer wie Lactone.

Überraschend wurde gefunden, dass selbst reaktive, leicht zur Hydrolyse und Vernetzung neigende Alkoxysilylgruppen aufweisende ungesättigte Polyether einer Hydrosilylierungsreaktion unterworfen werden können, ohne dass es dabei zu ungewünschten Nebenreaktionen der Alkoxysilylgruppen oder des Siloxangerüsts kommt. Damit wird erstmalig ein Verfahren zur Verfügung gestellt, das es gestattet, auf dem einfachen Wege der Hydrosilylierung zu alkoxysilylfunktionellen und damit härtbaren Polyethersiloxanstrukturen zu gelangen.

Erfindungsgemäß verwendbare Wasserstoffsiloxane sind Verbindungen der Formel (XI) und deren Mischungen. 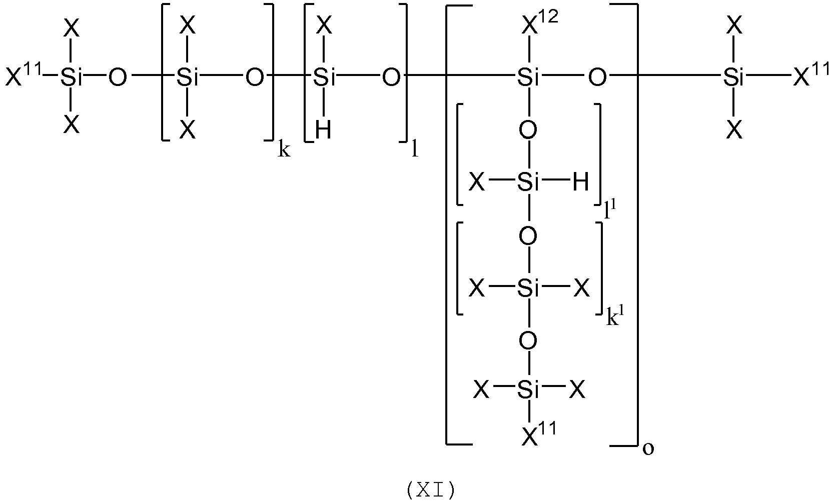 wobei
X¹¹ wahlweise X oder H ist,
X¹² wahlweise X¹¹ oder dem Fragment der Formel (XIa) entspricht, 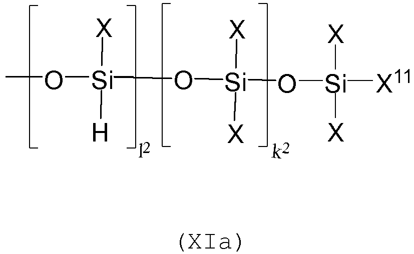
   wobei die Indizes k, k¹, k², und o die zuvor bei Formel (I) genannten Bedeutungen haben und wobei
   l, l¹, l² unabhängig voneinander ganze Zahlen von 0 bis 120, vorzugsweise von 0 bis 60, insbesondere von 0 bis 50,
   mit der Maßgabe, dass X¹¹ mindestens einmal Wasserstoff ist, wenn die Summe aus l, l¹ und l² Null ist,
   und mit der Maßgabe, dass die Summe aus l, l¹ und l² mindestens 1 ist, wenn X¹¹ gleich X ist.

Derartige Wasserstoffsiloxane können wie im Stand der Technik in EP-A1-1 439 200 und der nicht vorveröffentlichten Patentanmeldung DE 10 2007 055485.2 beschrieben, hergestellt werden. Die Offenbarung der EP-A1-1 439 200 wird hiermit vollumfänglich als Teil und Gegenstand dieser Beschreibung eingeführt.

Als Katalysatoren für die Hydrosilylierungsreaktion eignen sich beispielsweise Übergangsgruppenmetall-Katalysatoren der d-Elemente der 8. bis 10. Nebengruppe des periodischen Systems der Elemente, insbesondere Platinverbindungen wie beispielsweise Hexachloroplatinsäure, cis-Platin, Bis-(cycloocten)Platindichlorid, carbo-Platin, Platin(0)-(divinyltetramethyldisiloxan)-Komplexe, sogenannte Karstedt-Katalysatoren, oder auch mit unterschiedlichen Olefinen komplexierte Platin(0)-Komplexe. Desweiteren eignen sich prinzipiell Rhodium-, Iridium- und Rutheniumverbindungen, wie beispielsweise Tris(triphenylphosphin)-Rhodium(I)chlorid oder Tris(triphenylphosphin)-Ruthenium(II)dichlorid. Im Sinne des erfindungsgemäßen Verfahrens bevorzugte Katalysatoren sind Platin(0)-Komplexe, insbesondere bevorzugt sind gegebenenfalls modifizierte Karstedt-Katalysatoren, die beispielsweise gemäß EP-A-1 520 870 hergestellt werden.
Als Reaktionspartner für die Wasserstoffsiloxane dienen alle Verbindungen, die nach dem in der noch nicht vorveröffentlichten Schrift DE 10 2008 000360.3 beschriebenen Alkoxylierungsverfahren aus Startverbindungen der Formel (XII) und deren Mischungen

R¹-H (XII)

durch Alkoxylierung mit epoxyfunktionellen Alkoxysilanen der Formel (III) hervorgegangen sind und die mindestens eine ungesättigte, zur Hydrosilylierung befähigte funktionelle Gruppe sowie mindestens eine reaktive Hydroxylgruppe enthalten (das H gehört zur OH-Gruppe eines Alkohols oder einer phenolischen Verbindung). Zur Hydrosilylierung eignen sich Kohlenstoff-KohlenstoffDoppelbindungen und -Dreifachbindungen enthaltende Verbindungen, und zwar ganz besonders solche, in denen die ungesättigte Gruppe terminal angeordnet ist. Die gemäß DE 10 2008 000360.3 gewonnenen Alkoxysilylgruppen tragenden Alkoxylierungsprodukte lassen sich einzeln oder im beliebigen Gemisch miteinander durch Hydrosilylierung zu den erfindungsgemäßen SiC-verknüpften Polyethersiloxanen der Formel (I) umsetzen. Es besteht ferner die Möglichkeit, dem Reaktionsgemisch weitere hydrosilylierbare, vorzugsweise ebenfalls alkoxysilylfunktionelle Verbindungen hinzuzufügen. Zu diesen Verbindungen gehören zum Beispiel vinylische Silanverbindungen wie Vinyltrimethoxysilan, Vinyltriethoxysilan, Vinyl-methyl-dimethoxysilan, Vinylethyl-diethoxysilan oder auch andere funktionelle Gruppen aufweisende Komponenten wie Allylglycidylether.

R¹ entspricht einem einfach oder mehrfach ungesättigten, gegebenenfalls verzweigten aliphatischen, cycloaliphatischen oder aromatischen Kohlenwasserstoffrest oder stellt einen ungesättigten Polyetherrest vom Typ einer Alkoxy-, Arylalkoxy- oder Alkylarylalkoxygruppe dar, bei der die Kohlenstoffkette durch Sauerstoffatome unterbrochen sein kann. Die Kettenlänge der als Startverbindung einsetzbaren Alkoxy-, Arylalkoxy- oder Alkylarylalkoxygruppen aufweisenden Polyetherreste ist beliebig. Vorzugsweise enthält die Polyether-, Alkoxy-, Arylalkoxy- oder Alkyarylalkoxygruppe 1 bis 1.500 Kohlenstoffatome, besonders bevorzugt 2 bis 300 Kohlenstoffatome, insbesondere 2 bis 100 Kohlenstoffatome.
Als OH-funktionelle Startverbindungen R¹-H (XII) werden vorzugsweise Verbindungen mit Molmassen von 18 bis 10.000 g/mol, insbesondere 50 bis 2000 g/mol und mit 1 bis 8, bevorzugt mit 1 bis 4 Hydroxylgruppen eingesetzt.

Beispielhaft für Verbindungen der Formel (XII) seien Allylalkohol, 5-Hexen-1-ol, 10-Undecen-1-ol, Monoallyl- und Diallylether von Trimethylolpropan, Glycerin und Pentaerythrit, 1,4-Butindiol und zum Beispiel Propargylalkohol sowie deren Alkoxylierungsprodukte genannt.

Vorteilhaft werden ungesättigte niedermolekulare Polyetherole mit 1-8 Hydroxylgruppen und Molmassen von 50 bis 2000 g/mol, die ihrerseits zuvor durch DMC-katalysierte Alkoxylierung hergestellt wurden, als Starterverbindungen verwendet.

Die Hydrosilylierungsreaktion kann im Eintopfverfahren oder im Zudosierverfahren, einstufig oder mehrstufig durchgeführt werden. Zur Kompatibilisierung der Reaktanden oder auch zur vereinfachten Handhabung hochviskoser bis fester Reaktanden kann die Reaktion in Lösungsmitteln, wie beispielsweise Toluol oder Xylol durchgeführt werden. Die Reaktion kann ebenfalls lösungsmittelfrei in Form einer Emulsionspolymerisation durchgeführt werden. Großtechnisch kann die Hydrosilylierung sowohl im Rührkessel als klassischer Batch-Prozeß als auch im kontinuierlichen Prozeß, wie beispielsweise in der EP 1 013 701 beschrieben, gefahren werden.

Die Hydrosilylierkatalysatoren können als Feststoff oder in gelöster Form in das Reaktionsgemisch oder in einen der Reaktanden dosiert werden. Die eingesetzten Katalysatormengen liegen im Bereich von 1 bis 500 ppm, bevorzugt bei 1 bis 100 ppm und insbesondere bei 1 bis 30 ppm.

Die Hydrosilylierung kann bei Temperaturen im Bereich von 20 bis 200°C durchgeführt werden, bevorzugt bei 40 bis 150°C und insbesondere bevorzugt bei 60 bis 120°C. Der Reaktionsumsatz kann mittels gasvolumetrischer Bestimmung des siloxangebundenen Wasserstoffs erfolgen. Dabei wird eine Probe des Reaktionsgemisches in alkalischer Lösung zersetzt und der dadurch freigesetzte Wasserstoff an einer Gasbürette gemessen.

Die durch die Hydrosilylierung erhaltenen Produkte können in Abhängigkeit der verwendeten Edukte transparent oder milchig trüb sein. Die Viskositäten liegen im Bereich von 1 bis 100 000 mPas, bevorzugt von 1 bis 50 000 mPas und insbesondere bevorzugt von 1 bis 20 000 mPas.

Die erfindungsgemäßen alkoxysilylfunktionellen Polyethersiloxane eignen sich zu Herstellung von härtbaren Zusammensetzungen, hergestellt unter Verwendung von alkoxysilylfunktionellen Polyethersiloxanen.

Weiterer Gegenstand der Erfindung sind Zusammensetzungen enthaltend alkoxysilylfunktionelle Polyethersiloxane zur Verwendung als Tenside, Kleb-, Dicht- und Bindemittel, Füll- Hilfs- und Zusatzstoffe, Emulgatoren, Netz- und Dispergieradditive, Polymeradditive, Lackverlaufsmittel, Schmiermittel, als Hilfsmittel zur tertiären Erdölförderung, als Textilhilfsmittel zum Avivieren von Fasern, Garnen oder flächigen Textilprodukten, als Entschäumer, als kosmetische Additive oder als Schaumstabilisatoren insbesondere im Polyurethan-Schaum.

Ein weiterer Gegenstand der Erfindung sind Zusammensetzungen enthaltend alkoxysilylfunktionelle Polyethersiloxane, gegebenenfalls gelöst in einem Lösungsmittel, zur Verwendung in einem Verfahren geeignet zur Beschichtung, Extrusion von Kunststoffen, Verklebung, Stabilisierung von Polymeren, Benetzung, Entschäumung, Emulgierung, Dispergierung und/oder Oberflächenmodifizierung.

Weitere Gegenstände der Erfindung werden durch die Ansprüche beschrieben, deren Offenbarungsgehalt vollumfänglich Teil der Beschreibung ist.

Die erfindungsgemäßen Silylgruppen tragenden Polyethersiloxane und die entsprechenden Verfahren zu deren Herstellung werden nachfolgend beispielhaft beschrieben, ohne dass die Erfindung als auf diese beispielhaften Ausführungsformen beschränkt angesehen werden kann.
Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können.

### Experimenteller Teil:

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt gelesen werden kann.

### 1) Alkoxylierung von Siliconpolyethercopolymeren bzw. Polysiloxanen mit epoxyfunktionellen Alkoxysilanen an Doppelmetallcyanid-Katalysatoren

OH-Zahlen wurden nach der Kaltacetylierungsmethode in Anlehnung an die Analysenvorschrift C-V 17A (98) der Deutschen Gesellschaft für Fettwissenschaft (DGF) durchgeführt. Die mittleren Molmassen wurden aus den so bestimmten OH-Zahlen rechnerisch ermittelt. Der Epoxidsauerstoffgehalt der Endprodukte wurde in Gegenwart von HCl conc. nach dem Prinzip der Rücktitration mit Natronlauge bestimmt.

### Beispiel 1.1:

Als Kettenstarter wird ein Polyethersiloxan der Formel (IX) mit der Struktur k = 27, l³ = 5, l⁴ = o = 0, X = X⁶ = Methyl eingesetzt, das zuvor durch Hydrosilylierung eines Wasserstoffsiloxans mit einem Überschuss eines OHterminierten Allylpolyethers der mittleren Molmasse 800 g/mol und bestehend zu 64 Gew.-% aus Ethylenoxid- und zu 36 Gew.-% aus Propylenoxideinheiten, nach Stand der Technik hergestellt wurde.
In einem 3 Liter Autoklaven werden 550 g dieses Polyethersiloxans und 0,071 g Zinkhexacyanocobaltat-DMC-Katalysator unter Stickstoff vorgelegt und unter Rühren auf 130 °C aufgeheizt. Der Reaktor wird bis auf einen Innendruck von 30 mbar evakuiert, um evtl. vorhandene flüchtige Inhaltsstoffe destillativ zu entfernen. Zur Aktivierung des DMC-Katalysators wird eine Portion von 40,0 g Propylenoxid zugeführt. Nach 15 min und Anspringen der Reaktion (Reaktorinnendruckabfall) werden 166,8 g 3-Glycidyloxypropyltriethoxysilan (DYNASYLAN© GLYEO) kontinuierlich innerhalb von 1 h bei 130 °C und max. 0,2 bar Reaktorinnendruck absolut zudosiert. Nach 1 h Nachreaktion bei 130 °C schließt sich die Entgasungsstufe an. Dabei werden flüchtige Anteile im Vakuum abdestilliert. Das fertige mittelviskose und farblose Polyethersiloxan-Copolymere wird auf unter 80 °C abgekühlt und aus dem Reaktor abgelassen.
Das leicht gelbe Produkt enthält im Mittel pro Polyethersiloxan-Molekül 5 Polyetherketten, die jeweils terminal triethoxysilyl-funktionalisiert und über eine SiC-Bindung an das Siloxangerüst gebunden sind. Die OH-Zahl beträgt 39 mg KOH/g. Freie Epoxidgruppen sind im Endprodukt nicht nachzuweisen.

### Beispiel 1.2:

Als Kettenstarter wird ein lineares Polyethersiloxan der Formel (IX) mit der Struktur k = 25, l³ = l⁴ = o = 0, X = Methyl, X⁶ = -(CH₂)₆-OH eingesetzt, das zuvor durch Hydrosilylierung eines Wasserstoffsiloxans mit Hexenol nach Stand der Technik hergestellt wurde.
In einem 1 Liter Glaskolben mit aufgesetztem Rückflusskühler werden 200 g dieses Polyethersiloxans und 0,027 g Zinkhexacyanocobaltat-DMC-Katalysator unter Stickstoff vorgelegt und unter Rühren auf 130 °C aufgeheizt. Der Reaktor wird bis auf einen Innendruck von 30 mbar evakuiert, um evtl. vorhandene flüchtige Inhaltsstoffe destillativ zu entfernen. Zur Aktivierung des DMC-Katalysators wird eine erste Portion von 10,0 g 3-Glycidyloxypropyltriethoxysilan (DYNASYLAN© GLYEO) zugeführt. Nach 15 min werden weitere 88,4 g DYNASYLAN© GLYEO kontinuierlich in 1,5 h bei 130 °C zugeführt. Im Anschluss werden 28,8 g 1,2-Epoxybutan in 1,5 h bei 130 °C unter leichtem Rückfluss addiert. Nach 1 h Nachreaktion ist alles Epoxybutan umgesetzt und kein Rückfluss mehr zu beobachten. Bei 130 °C werden flüchtige Anteile im Vakuum abdestilliert.
Das fertige niedrig viskose und etwas trübe Polyethersiloxan-Copolymere enthält im Mittel pro Polyethersiloxan-Molekül 2 terminale kurze Polyetherketten, die jeweils triethoxysilyl-funktionalisiert und mit einem Epoxybutenblock abgeschlossen sind. Die OH-Zahl beträgt 49,6 mg KOH/g. Freie Epoxidgruppen sind im Endprodukt nicht nachzuweisen.

### Beispiel 1.3:

Als Kettenstarter wird ein Polyethersiloxan der Formel (IX) mit der Struktur k = 40, l³ = 5,5, l⁴ = o = 0, X = X⁶ = Methyl eingesetzt, das zuvor durch Hydrosilylierung eines Wasserstoffsiloxans mit einem Überschuss eines OHterminierten Allylpolyethers der mittleren Molmasse 1300 g/mol und bestehend zu 18 Gew.-% aus Ethylenoxid- und zu 82 Gew.-% aus Propylenoxideinheiten, nach Stand der Technik hergestellt wurde.
In einem 3 Liter Autoklaven werden 385,4 g dieses Polyethersiloxans und 0,045 g Zinkhexacyanocobaltat-DMC-Katalysator unter Stickstoff vorgelegt und unter Rühren auf 130 °C aufgeheizt. Der Reaktor wird bis auf einen Innendruck von 30 mbar evakuiert, um evtl. vorhandene flüchtige Inhaltsstoffe destillativ zu entfernen. Zur Aktivierung des DMC-Katalysators wird eine Portion von 36,0 g Propylenoxid zugeführt. Nach 35 min und Anspringen der Reaktion (Reaktorinnendruckabfall) werden 65,9 g 3-Glycidyloxypropyltrimethoxysilan (DYNASYLAN© GLYMO) kontinuierlich innerhalb von 30 min bei 130 °C und max. 0,4 bar Reaktorinnendruck absolut zudosiert. Nach 1 h Nachreaktion bei 130 °C schließt sich die Entgasungsstufe an. Das fertige mittelviskose und fast farblose Polyethersiloxan-Copolymere wird auf unter 80 °C abgekühlt und aus dem Reaktor abgelassen.
Das Produkt enthält im Mittel pro Polyethersiloxan-Molekül 5,5 Polyetherketten, die jeweils terminal trimethoxysilyl-funktionalisiert sind. Die OH-Zahl beträgt 27 mg KOH/g. Freie Epoxidgruppen sind im Endprodukt nicht nachzuweisen.

### Beispiel 1.4:

Als Kettenstarter wird ein terminal SiOH-funktionelles Polysiloxan der Formel (X) der Struktur m = 200, R' = Methyl, X⁸ = H mit einem Wassergehalt von <500 ppm eingesetzt.
In einem 3 Liter Autoklaven werden 360,0 g dieses Polysiloxans und 0,064 g Zinkhexacyanocobaltat-DMC-Katalysator unter Stickstoff vorgelegt und unter Rühren auf 130 °C aufgeheizt. Der Reaktor wird bis auf einen Innendruck von 30 mbar evakuiert, um evtl. vorhandene flüchtige Inhaltsstoffe destillativ zu entfernen. Zur Aktivierung des DMC-Katalysators wird eine Portion von 50,0 g Propylenoxid zugeführt. Nach 40 min und Anspringen der Reaktion (Reaktorinnendruckabfall) werden zunächst weitere 182 g Propylenoxid, danach 22,0 g 3-Glycidyloxypropyltriethoxysilan (DYNASYLAN© GLYEO) und abschließend nochmals 116 g Propylenoxid kontinuierlich innerhalb von zusammen 2,45 h bei 130 °C und max. 0,3 bar Reaktorinnendruck absolut zudosiert. Nach 1,5 h Nachreaktion bei 130 °C schließt sich die Entgasungsstufe an. Das fertige viskose und etwas trübe Polyethersiloxan-Copolymere wird auf unter 80 °C abgekühlt und aus dem Reaktor abgelassen.
Das Produkt enthält im Mittel pro Polyethersiloxan-Molekül 2 blockartig aufgebaute Polyetherketten, die jeweils triethoxysilyl-funktionalisiert und über eine SiOC-Vernüpfung an das Siloxangerüst gebunden sind. Die OH-Zahl beträgt 2,6 mg KOH/g. Freie Epoxidgruppen sind im Endprodukt nicht nachzuweisen.

### 2) Hydrosilylierende Verknüpfung von ungesättigten Alkoxysilylgruppen tragenden Polyethern, die zuvor durch eine Alkoxylierung der entsprechenden ungesättigten Startverbindungen mit epoxyfunktionellen Alkoxysilanen an DMC-Katalysatoren gewonnen wurden.

### Beispiel 2.1:

25 g Heptamethyltrisiloxan und 225 g eines Allylpolyoxyalkylens, hergestellt nach dem in der bislang unveröffentlichten Anmeldung DE 10 2008 000360.3 beschriebenen Verfahren, mit einer durchschnittlichen Molmasse von 1350 g/mol, einem Ethylenoxidanteil von 28 Gew%, einem Propylenoxidanteil von 30 Gew% und einem Dynasylan© GLYEO-Anteil von 42 Gew% und im Mittel 2 Triethoxysilylgruppen, werden in einem Vierhalskolben, ausgestattet mit einem KPG-Rührer, einem Innenthermometer und einem Rückflusskühler unter Rühren auf 70°C erhitzt. Es werden 5 ppm Platin in Form eines gemäß EP 1520870 modifizierten Platin(0)-Katalysators mit einer Spritze hinzugegeben. Der gasvolumetrisch bestimmte Umsatz ist nach 2,5 Stunden quantitativ. Das nur leicht trübe, gelbliche Produkt hat eine Viskosität von 717 mPas.

### Beispiel 2.2

25 g Heptamethyltrisiloxan und 252 g eines Allylpolyoxyalkylens, hergestellt nach dem in der bislang unveröffentlichten Anmeldung DE 10 2008 000360.3 beschriebenen Verfahren, mit einer durchschnittlichen Molmasse von 1510 g/mol, einem Ethylenoxidanteil von 10 Gew%, einem Propylenoxidanteil von 52 Gew% und einem Dynasylan© GLYEO-Anteil von 38 Gew% und im Mittel 2 Triethoxysilylgruppen werden in einem Vierhalskolben, ausgestattet mit einem KPG-Rührer, einem Innenthermometer und einem Rückflusskühler unter Rühren auf 70°C erhitzt. Es werden 5 ppm Platin in Form eines gemäß EP 1520870 modifizierten Platin(0)-Katalysators mit einer Spritze hinzugegeben. Der gasvolumetrisch bestimmte Umsatz ist nach 2,5 Stunden quantitativ. Das nur leicht trübe, gelbliche Produkt hat eine Viskosität von 494 mPas.

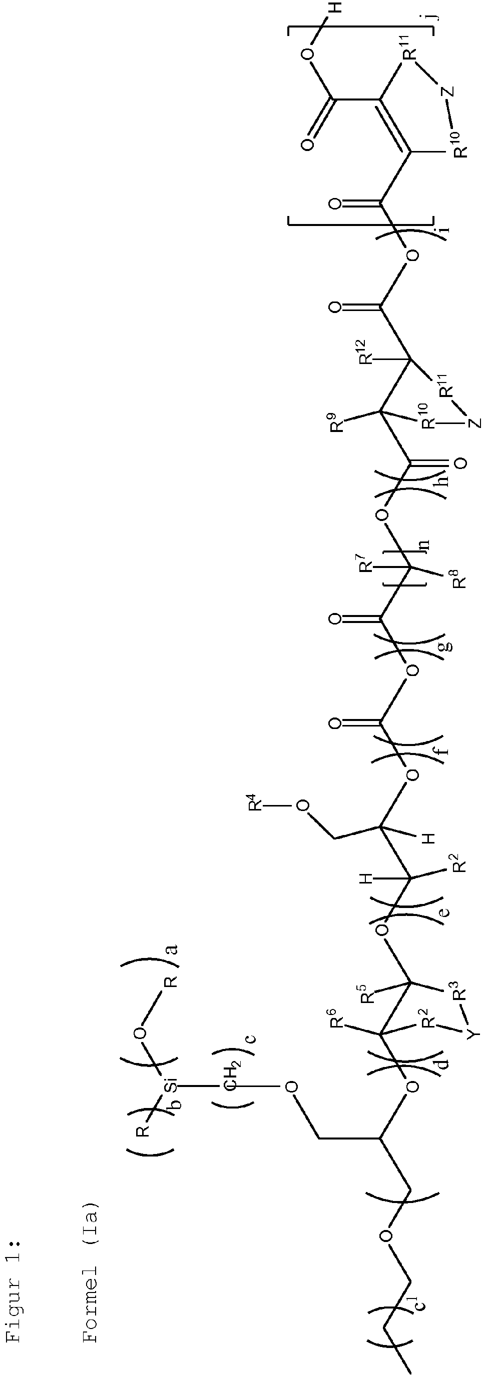

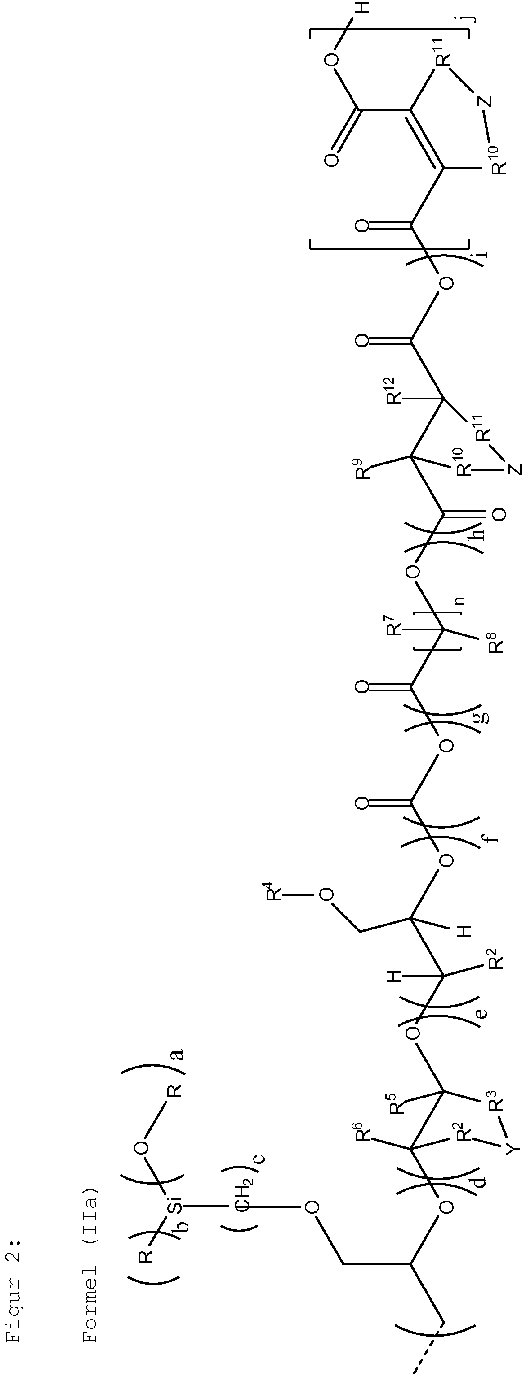

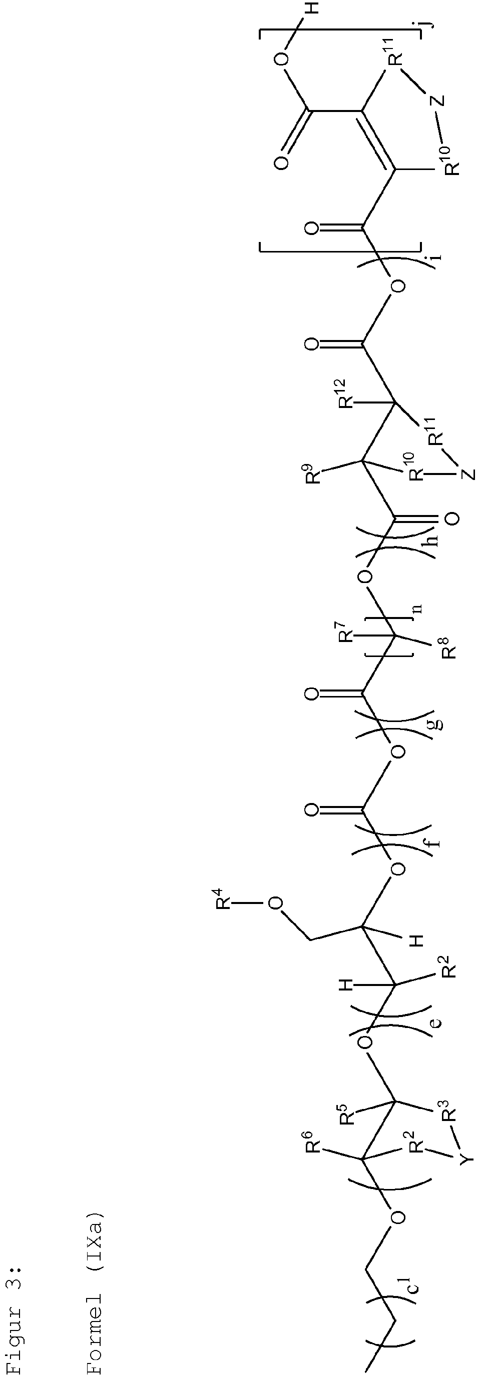

## Patentansprüche

1. Alkoxysilyl-funktionelle Polyethersiloxane der Formel
(I) sowie deren Mischungen, 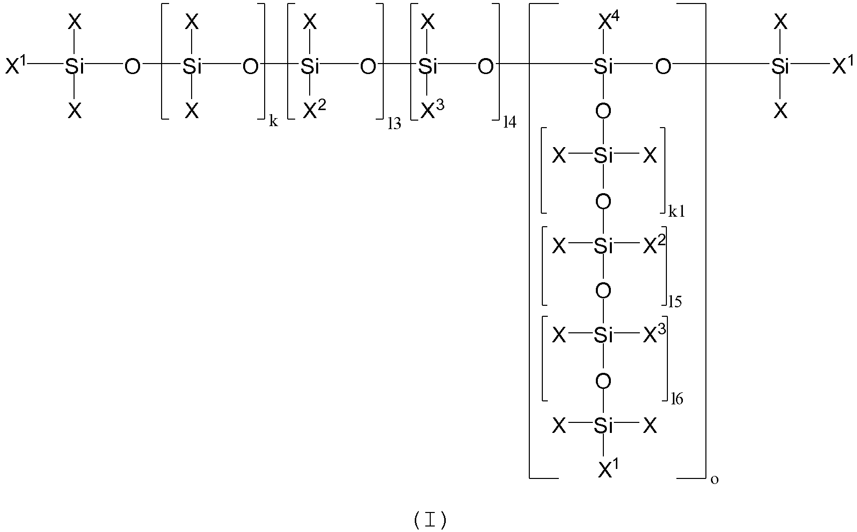 wobei
X ein linearer, cyclischer oder verzweigter, aliphatischer oder aromatischer, gesättigter oder ungesättigter Kohlenwasserstoffrest mit 1 bis 20 C-Atomen ist, der gegebenenfalls Heteroatome wie Sauerstoff, Stickstoff, Phosphor oder Schwefel enthalten kann,
X¹ wahlweise X, X² oder X³ ist,
X² ein Alkoxysilylgruppen tragender OH-funktioneller, gegebenenfalls Ester- oder Carbonat-modifizierter Polyoxyalkylenrest der Formel (Ia) ist, 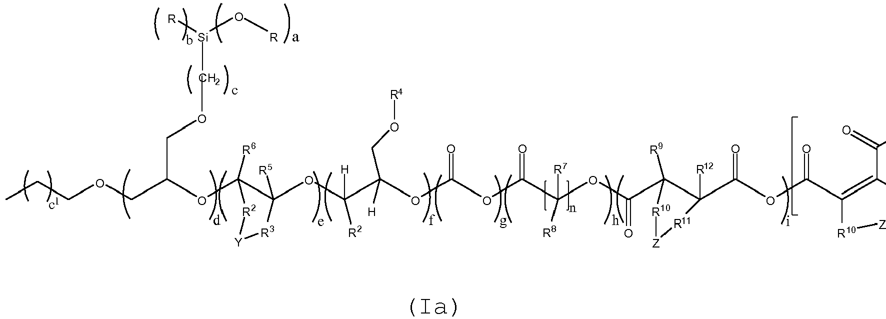
X³ ein endständig veretherter Polyoxyalkylenrest der Formel (Ib) ist, 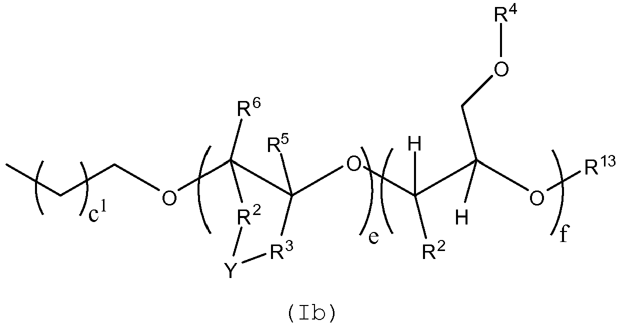 wobei
R¹³ wahlweise eine Alkylgruppe mit 1 bis 18 C-Atomen, oder ein mit einer monofunktionellen Carbonsäure endständig veresterter Polyoxyalkylenrest der Formel (Ic) ist, 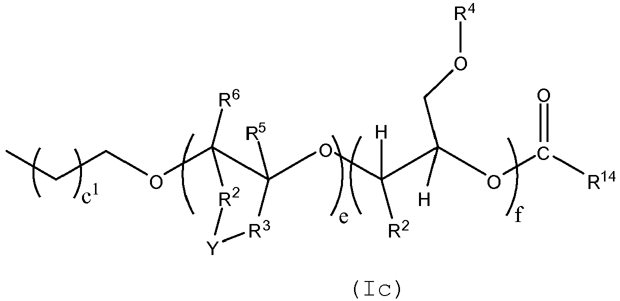 wobei
R¹⁴ ein gesättigter oder ein ein- oder mehrfach ungesättigter, entweder linearer oder verzweigter, aliphatischer oder aromatischer Kohlenwasserstoffrest mit 1 bis 30 Kohlenstoffatomen ist, der seinerseits OH-Gruppen tragen kann,
X⁴ entweder X¹ oder dem Fragment der Formel (Id) entspricht 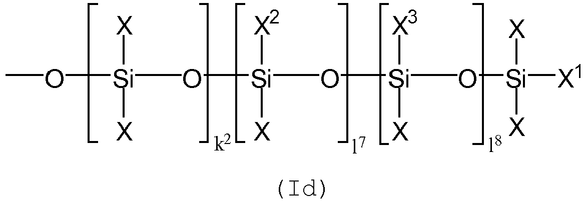 wobei
k, k¹ und k² unabhängig voneinander ganze Zahlen von 0 bis 500 sind,
l³, l⁴, l⁵, l⁶, l⁷ und l⁸ unabhängig voneinander ganze Zahlen von 0 bis 60 sind,
o eine ganze Zahl von 0 bis 10 ist,
mit der Maßgabe, dass
X¹ mindestens einmal gleich X² ist, falls die Summe aus l³, l⁵ und l⁷ Null ist, und dass
die Summe aus l³, l⁵ und l⁷ mindestens 1 ist, wenn X¹ ungleich X² ist,
wobei
a eine ganze Zahl von 1 bis 3 ist,
b eine ganze Zahl von 0 bis 2 ist,
die Summe von a und b gleich 3 ist,
c eine ganze Zahl von 0 bis 24 ist,
c¹ eine ganze Zahl von 0 bis 24 ist,
d eine ganze Zahl von 1 bis 500 ist,
e eine ganze Zahl von 0 bis 5000 ist,
n eine ganze Zahl von 2 bis 8 ist und
f, g, h, i und j jeweils ganze Zahlen von 0 bis 500 sind,
und mit der Maßgabe, dass die Fragmente mit den Indices d bis j untereinander frei permutierbar, d.h. in der Sequenz innerhalb der Polyetherkette gegeneinander austauschbar sind und wobei die verschiedenen Monomereinheiten der Fragmente mit den Indexzahlen d bis j untereinander blockweise aufgebaut sein oder aber auch einer statistischen Verteilung unterliegen können und
und mit der Maßgabe, dass die Fragmente mit den Indices k, k¹, k², l³, l⁴, l⁵, l⁶, l⁷, l⁸, und o untereinander frei permutierbar, d.h. innerhalb der Siloxankette gegeneinander austauschbar sind und wahlweise statistisch verteilt oder blockartig aneinandergereiht vorliegen können,
R einen oder mehrere gleiche oder verschiedene Reste darstellt, ausgewählt aus linearen oder verzweigten, gesättigten, einfach oder mehrfach ungesättigten Alkylresten mit 1 bis 20, insbesondere 1 bis 6 Kohlenstoffatomen oder Halogenalkylgruppen mit 1 bis 20 Kohlenstoffatomen dar,
sowie
R² oder R³, sowie R⁵ oder R⁶ sind gleich oder unabhängig voneinander H oder ein gesättigter oder gegebenenfalls einfach oder mehrfach ungesättigter, auch weiter substituierter, gegebenenfalls ein- oder mehrwertiger Kohlenwasserstoffrest, wobei für die Reste R⁵ oder R⁶ gilt, dass sie gleich einem einwertigen Kohlenwasserstoffrest sind und der Kohlenwasserstoffrest cycloaliphatisch über das Fragment Y verbrückt sein kann, wobei Y auch nicht vorhanden sein kann, oder aber eine Methylenbrücke mit 1 oder 2 Methyleneinheiten ist; ist Y gleich 0, so sind R² oder R³ unabhängig voneinander gleich ein linearer oder verzweigter Rest mit 1 bis 20, bevorzugt 1 bis 10 Kohlenstoffatomen, ihrerseits weiter substituiert sein können und funktionelle Gruppen wie Halogene, Hydroxylgruppen oder Glycidyloxypropylgruppen tragen,
R⁴ ein linearer oder verzweigter Alkylrest von 1 bis 18 Kohlenstoffatomen ist, der an einen aromatischen oder cycloaliphatischen Rest gebunden sein kann und
R⁷ und R⁸ unabhängig voneinander entweder Wasserstoff, Alkyl-, Alkoxy-, Aryl- oder Aralkylgruppen sind,
R⁹, R¹⁰, R¹¹ und R¹² unabhängig voneinander entweder Wasserstoff, Alkyl-, Alkenyl-, Alkoxy-, Aryl- oder Aralkylgruppen sind, wobei der Kohlenwasserstoffrest cycloaliphatisch oder aromatisch über das Fragment Z verbrückt sein, wobei Z sowohl einen divalenten Alkylen- als auch Alkenylenrest darstellen kann.

2. Kammartig verzweigte Copolymere in Form von Polyethersiloxanen gemäß Anspruch 1 mit Alkoxysilylfunktionalisierung der Formel (I), in denen die Polyetherketten jeweils über SiC-Bindungen an das Polysiloxangrundgerüst gebunden sind.

3. Lineare Polyether-Siloxan-Polyether-Triblockcopolymere mit Si-C-Verknüpfung gemäß Anspruch 1 mit o gleich 0 (Null), l³ gleich l⁴ gleich 0 (Null) und X¹ gleich X² gleich einem Alkoxysilylpolyetherrest.

4. Verzweigte Polyether-Siloxan-Polyether-Blockcopolymere mit Si-C-Verknüpfung gemäß Anspruch 1 mit o ungleich 0 (Null), l³ gleich l⁴ gleich 0 (Null), l⁵ gleich l⁶ gleich 0 (Null) und X¹ gleich X² gleich einem Alkoxysilylpolyetherrest.

5. Lineare Polyether-Siloxan-Polyether-Triblockcopolymere der Formel (II), bei denen die mit Alkoxysilylgruppen ausgestatteten Polyetherketten über eine Si-O-C-Verknüpfung an den Siloxankörper gebunden sind, 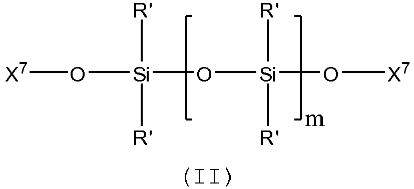 wobei
R' einem oder mehreren gleichen oder verschiedenen linearen oder verzweigten, gesättigten, einfach oder mehrfach ungesättigten Alkylresten mit 1 bis 20 Kohlenstoffatomen entspricht,
und
m eine ganze Zahl von 0 bis 5000 ist, und
X⁷ dem Polyetherfragment der Formel (IIa) entspricht und 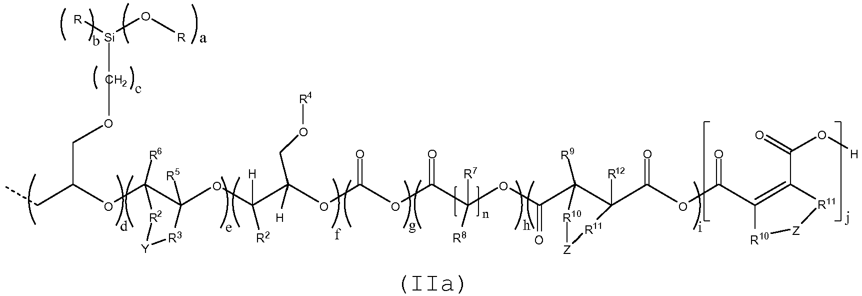 die Substituenten R, R²-R¹², die Reste Y und Z sowie die Indizes a, b, c, d, e, f, g, h, i, j und n den zuvor für die Verbindungen der Formel (Ia) genannten Definitionen entsprechen.

6. Verfahren zur Herstellung von alkoxysilylfunktionellen Polyethersiloxanen und deren Mischungen gemäß zumindest einem der Ansprüche 1 bis 5, **dadurch gekennzeichnet, dass** Polyethersiloxane oder Silanole mit Hilfe von DMC-Katalysatoren mit Alkoxysilylgruppen tragenden Epoxiden alkoxyliert werden.

7. Verfahren zur Herstellung von alkoxysilylfunktionellen Polyethersiloxanen und deren Mischungen gemäß zumindest einem der Ansprüche 1 bis 5 durch eine Übergangsmetall-katalysierte SiC-Verknüpfung von SiH-Gruppen aufweisenden Wasserstoffsiloxanen mit Alkoxysilylgruppen tragenden ungesättigten Polyethern.

8. Verfahren zur Herstellung von alkoxysilylfunktionellen Polyethersiloxanen gemäß Anspruch 7, die unter Erhalt des Siloxangerüsts verlaufen.

9. Verfahren zur Herstellung von alkoxysilylfunktionellen Polyethersiloxanen gemäß zumindest einem der Ansprüche 6 bis 8 indem alkoxysilylfunktionelle Polyethersiloxane der Formel (I) und deren Mischungen durch
a) Alkoxylierung von Siliconpolyethercopolymeren mit epoxyfunktionellen Alkoxysilanen an Doppelmetallcyanid-Katalysatoren
und/oder
b) hydrosilylierende Verknüpfung von ungesättigten Alkoxysilylgruppen-tragenden Polyethern, die zuvor durch eine Alkoxylierung der entsprechenden ungesättigten Startverbindungen mit epoxyfunktionellen Alkoxysilanen an DMC-Katalysatoren gewonnen werden.

10. Verfahren nach Anspruch 9 zur Herstellung von alkoxysilylfunktionellen Polyethersiloxanen der Formel (I) und deren Mischungen mittels Alkoxylierung von Siliconpolyethercopolymeren mit epoxyfunktionellen Alkoxysilanen an Doppelmetallcyanid-Katalysatoren.

11. Verfahren nach Anspruch 9 zur Herstellung von alkoxysilylfunktionellen Polyethersiloxanen der Formel (I) und deren Mischungen mittels hydrosilylierender Verknüpfung von ungesättigten Alkoxysilylgruppen tragenden Polyethern, die durch eine Alkoxylierung der entsprechenden ungesättigten Startverbindungen mit epoxyfunktionellen Alkoxysilanen an DMC-Katalysatoren dargestellt werden.

12. Verfahren nach Anspruch 9 zur Herstellung von alkoxysilylfunktionellen Polyethersiloxanen der Formel (I) und deren Mischungen, **dadurch gekennzeichnet, dass** zumindest ein Alkylenoxid, eine Glycidylverbindung, ein Lacton und/oder ein cyclisches Anhydrid, sowie epoxyfunktionelles Alkoxysilan der Formel (III), 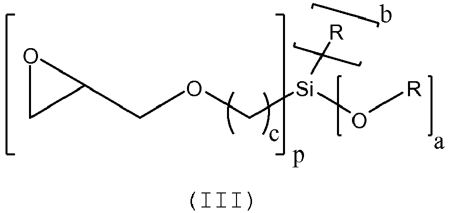 wobei
die Indizes a, b und c sowie der Rest R die bei Formel (Ia) definierten Bedeutungen haben und p eine ganze Zahl ist, die der Differenz aus 4-a-b entspricht,
an OH-Gruppen aufweisende Siloxan-gebundene oder freie Polyether der als Startverbindungen fungierenden Polyethersiloxansysteme unter Ringöffnung addiert werden.

13. Verfahren nach Anspruch 12, **dadurch gekennzeichnet, dass** als epoxidfunktionelle Alkoxysilane gemäß der Formel (III) 3-Glycidyloxypropyltrimethoxysilan, 3-Glycidyloxypropyltriethoxysilan, 3-Glycidyloxypropyltripropoxysilan, 3-Glycidyloxypropyltriisopropoxysilan, Bis(3-Glycidyloxypropyl)dimethoxysilan, Bis(3-Glycidyloxypropyl)diethoxysilan, 3-Glycidyloxyhexyltrimethoxysilan, 3-Glycidyloxyhexyltriethoxysilan, 3-Glycidyloxypropyl-methyl-dimethoxysilan, 3-Glycidyloxypropyl-ethyl-diethoxysilan verwendet werden.

14. Verfahren nach Anspruch 9 zur Herstellung von alkoxysilylfunktionellen Polyethersiloxanen der Formel (I) und deren Mischungen, **dadurch gekennzeichnet dass**, ungesättigte Alkoxysilylgruppen tragende Polyether an Wasserstoffsiloxane hydrosilylierend verknüpft werden.

15. Verfahren nach Anspruch 14, **dadurch gekennzeichnet, dass** Wasserstoffsiloxane der Formel (XI) und deren Mischungen 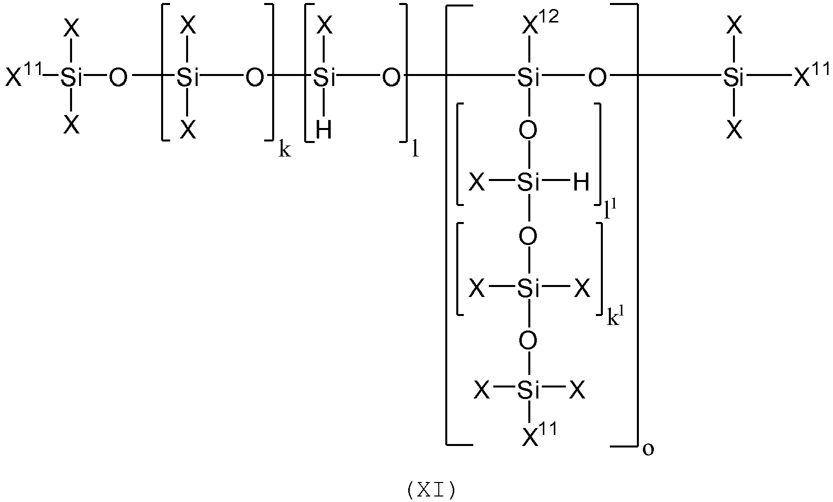 wobei
X¹¹ wahlweise X oder H ist,
X¹² wahlweise X¹¹ oder dem Fragment der Formel (XIa) entspricht, 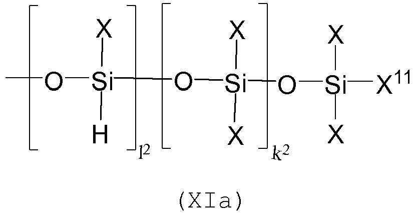
wobei die Indizes k, k¹, k², und o die zuvor bei Formel (I) genannten Bedeutungen haben und wobei
l, l¹, l² unabhängig voneinander ganze Zahlen von 0 bis 120, vorzugsweise von 0 bis 60, insbesondere von 0 bis 50 sind,
mit der Maßgabe, dass X¹¹ mindestens einmal Wasserstoff ist, wenn die Summe aus l, l¹ und l² Null ist, und mit der Maßgabe, dass die Summe aus l, l¹ und l² mindestens 1 ist, wenn X¹¹ gleich X ist.

16. Polymerartikel hergestellt unter Verwendung von alkoxysilylfunktionellen Polyethersiloxanen gemäß zumindest einem der Ansprüche 1 bis 5.

17. Härtbare Zusammensetzung hergestellt unter Verwendung von alkoxysilylfunktionellen Polyethersiloxanen gemäß zumindest einem der Ansprüche 1 bis 5.

18. Zusammensetzung enthaltend alkoxysilylfunktionelle Polyethersiloxane gemäß zumindest einem der Ansprüche 1 bis 5 zur Verwendung als Tenside, Kleb-, Dicht- und Bindemittel, Füll- Hilfs- und Zusatzstoffe, Emulgatoren, Netz- und Dispergieradditive, Polymeradditiv, Lackverlaufsmittel, Schmiermittel, als Hilfsmittel zur tertiären Erdölförderung, als Textilhilfsmittel zum Avivieren von Fasern, Garnen oder flächigen Textilprodukten, als Entschäumer, als kosmetische Additive oder als Schaumstabilisatoren insbesondere im PolyurethanSchaum.

19. Zusammensetzung enthaltend alkoxysilylfunktionelle Polyethersiloxane gemäß zumindest einem der Ansprüche 1 bis 5, gegebenenfalls gelöst in einem Lösungsmittel, zur Verwendung in einem Verfahren geeignet zur Beschichtung, Extrusion von Kunststoffen, Verklebung, Stabilisierung von Polymeren, Benetzung, Entschäumung, Emulgierung, Dispergierung und/oder Oberflächenmodifizierung.

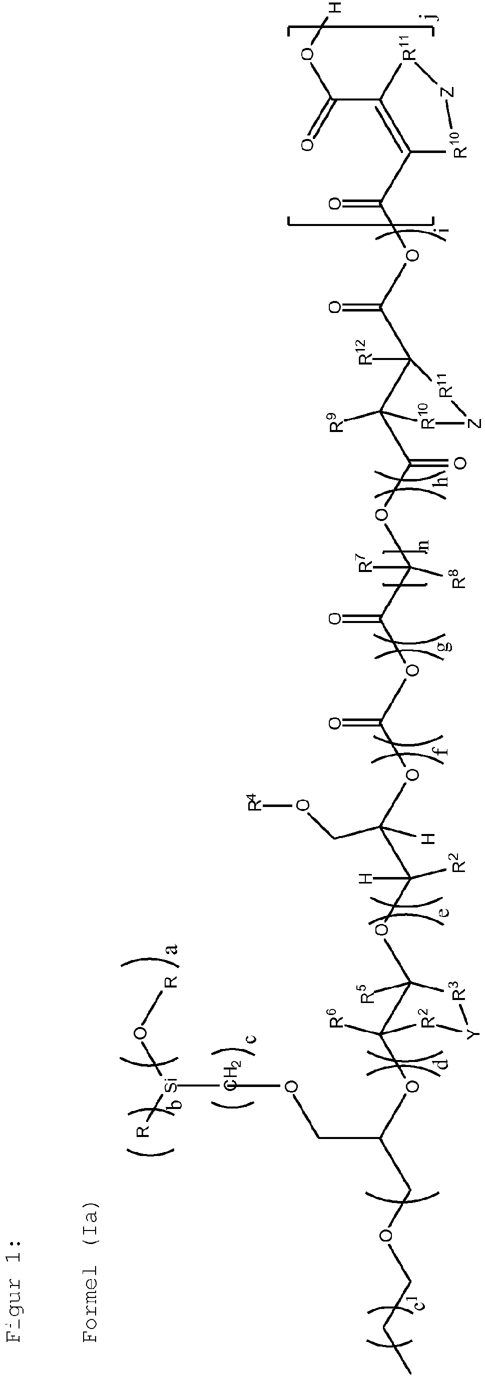

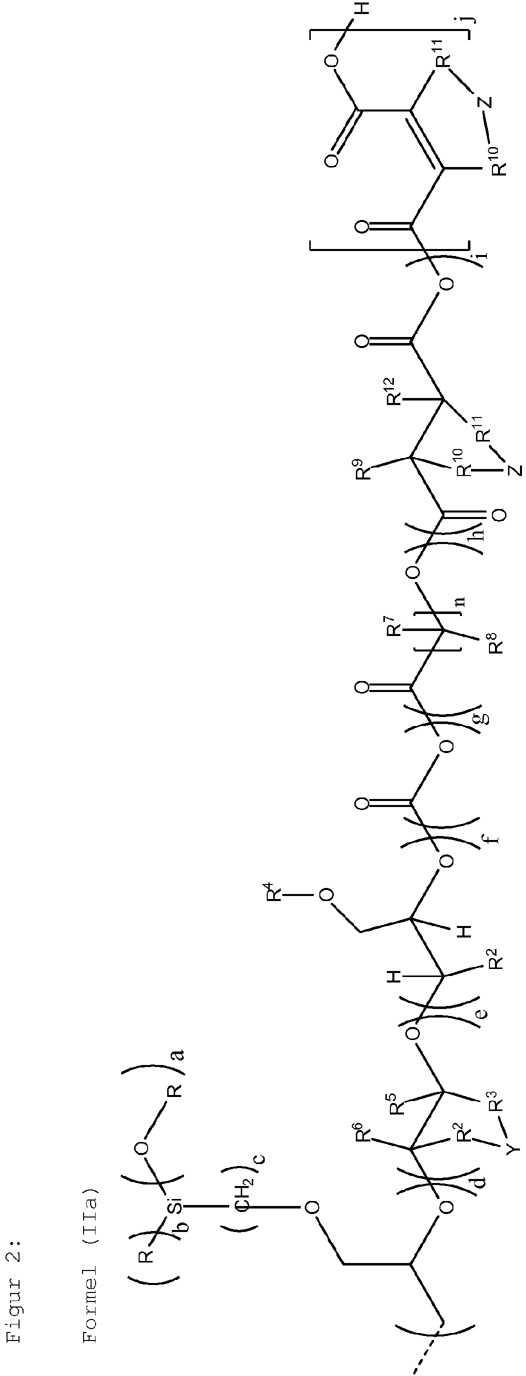

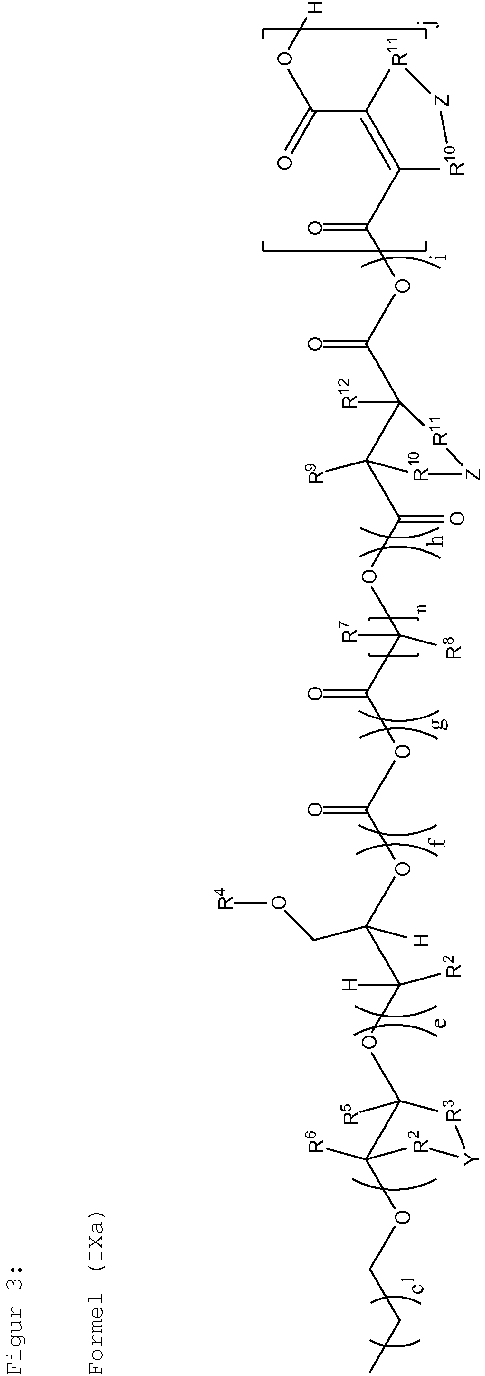

## Claims

1. Alkoxysilyl-functional polyether-siloxanes having the Formula (I) or a mixture of such polyether-siloxanes, 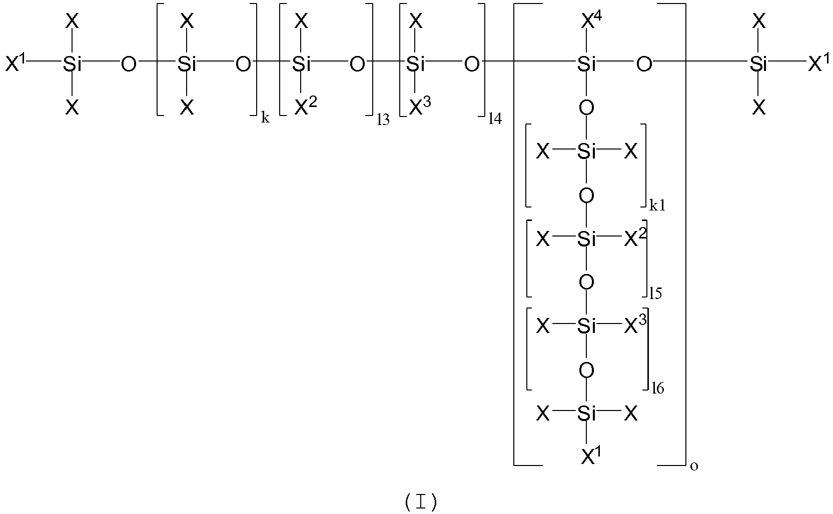 where
X is a linear, cyclic or branched, aliphatic or aromatic, saturated or unsaturated hydrocarbon radical which has from 1 to 20 carbon atoms and may, if desired, contain heteroatoms such as oxygen, nitrogen, phosphorus or sulphur,
X¹ is, as desired, X, X² or X³,
X² is an OH-functional, if desired, ester- or carbonate-modified polyoxyalkylene radical bearing alkoxysilyl groups and having the Formula (Ia), 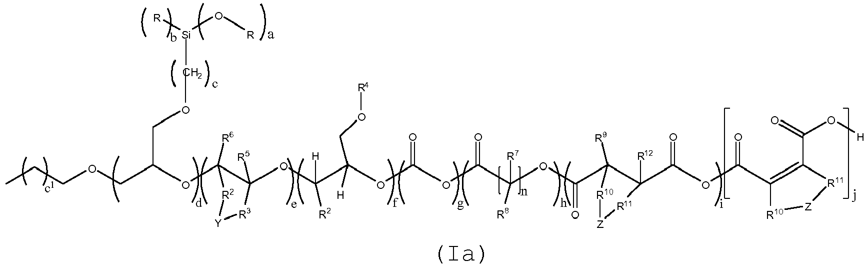
X³ is a terminally etherified polyoxyalkylene radical of the Formula (Ib), 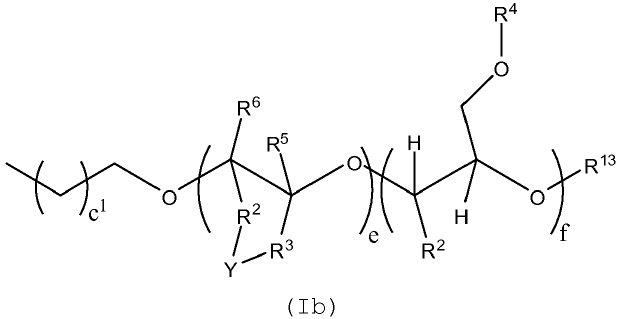
where
R¹³ is, as desired, an alkyl group having from 1 to 18 carbon atoms, or a polyoxyalkylene radical terminally esterified with a monofunctional carboxylic acid and having the Formula (Ic), 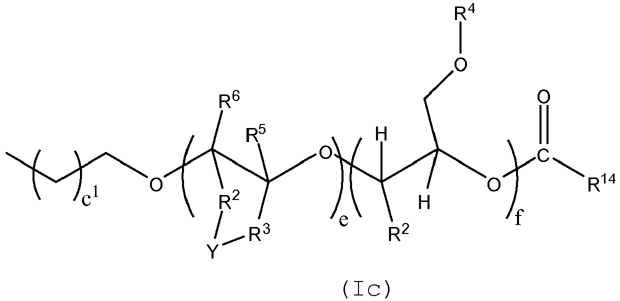
where
R¹⁴ is a saturated or monounsaturated or polyunsaturated, either linear or branched, aliphatic or aromatic hydrocarbon radical which has from 1 to 30 carbon atoms and may in turn bear OH groups,
X⁴ corresponds either to X¹ or the fragment of the Formula (Id) 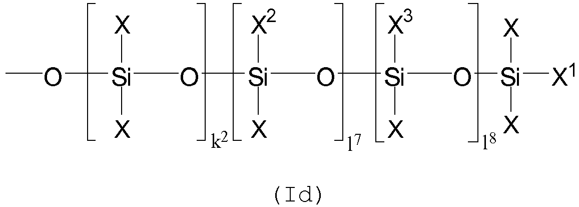
where
k, k¹ and k² are each, independently of one another, integers from 0 to 500,
l³, l⁴, l⁵, l⁶, l⁷ and l⁸ are each, independently of one another, an integer from 0 to 60,
o is an integer from 0 to 10,
with the proviso that
X¹ is at least once identical to X² if the sum of l³, l⁵ and l⁷ is zero,
and that
the sum of l³, l⁵ and l⁷ is at least 1 when X¹ is not identical to X²,
where
a is an integer from 1 to 3,
b is an integer from 0 to 2,
the sum of a and b is 3,
c is an integer from 0 to 24,
c¹ is an integer from 0 to 24,
d is an integer from 1 to 500,
e is an integer from 0 to 5000,
n is an integer from 2 to 8 and
f, g, h, i and j are each an integer from 0 to 500,
with the proviso that the fragments having the indices d to j can be freely permutated among one another, i.e. can be exchanged with one another in the sequence within the polyether chain, and the various monomer units of the fragments having the indices d to j can be arranged in blocks or else can be distributed randomly and
with the proviso that the fragments having the indices k, k¹, k², l³, l⁴, l⁵, l⁶, l⁷, l⁸ and o can be freely permutated among one another, i.e. can be exchanged with one another within the siloxane chain and can, as desired, be randomly distributed or arranged in blocks,
R represents one or more identical or different radicals selected from among linear or branched, saturated, monounsaturated or polyunsaturated alkyl radicals having from 1 to 20, in particular from 1 to 6, carbon atoms or haloalkyl groups having from 1 to 20 carbon atoms,
and
R² or R³, and also R⁵ or R⁶ are identical or are each, independently of one another, H or a saturated or, if desired, monounsaturated or polyunsaturated, also further substituted, if desired, monovalent or polyvalent hydrocarbon radical, where the radicals R⁵ and R⁶ are each a monovalent hydrocarbon radical and the hydrocarbon radical can be cycloaliphatically bridged via the fragment Y, where Y can also be absent or else is a methylene bridge having 1 or 2 methylene units; if Y is 0, R² or R³ are each, independently of one another, a linear or branched radical which has from 1 to 20, preferably from 1 to 10, carbon atoms and may be further substituted and bear functional groups such as halogens, hydroxyl groups or glycidyloxypropyl groups,
R⁴ is a linear or branched alkyl radical which has from 1 to 18 carbon atoms and can be bound to an aromatic or cycloaliphatic radical and
R⁷ and R⁸ are, independently of one another, either hydrogen, alkyl, alkoxy, aryl or aralkyl groups,
R⁹, R¹⁰, R¹¹ and R¹² are, independently of one another, either hydrogen, alkyl, alkenyl, alkoxy, aryl or aralkyl groups, where the hydrocarbon radical can be cycloaliphatically or aromatically bridged via the fragment Z and Z can be either a divalent alkylene radical or an alkenylene radical.

2. Comb-like branched copolymers in the form of polyether-siloxanes according to Claim 1 having the alkoxysilyl functionalisation of the Formula (I) in which the polyether chains are each bound via SiC bonds to the polysiloxane backbone.

3. Linear polyether-siloxane-polyether triblock copolymers having Si-C bonding according to Claim 1 in which o is 0 (zero), l³ = l⁴ = 0 (zero) and X¹ = X² = an alkoxysilylpolyether radical.

4. Branched polyether-siloxane-polyether block copolymers having Si-C bonding according to Claim 1 in which o is not equal to 0 (zero), l³ = l⁴ = 0 (zero), l⁵ = l⁶ = 0 (zero) and X¹ = X² = an alkoxysilylpolyether radical.

5. Linear polyether-siloxane-polyether triblock copolymers of the Formula (II) in which the polyether chains having alkoxysilyl groups are bound via an Si-O-C linkage to the siloxane body, 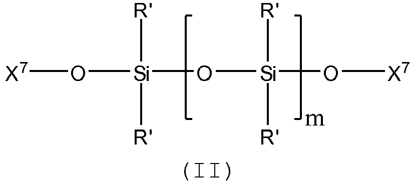 where
R' corresponds to one or more identical or different, linear or branched, saturated, monounsaturated or polyunsaturated alkyl radicals having from 1 to 20 carbon atoms,
and
m is an integer from 0 to 5000 and
X⁷ corresponds to the polyether fragment of the Formula (IIa) 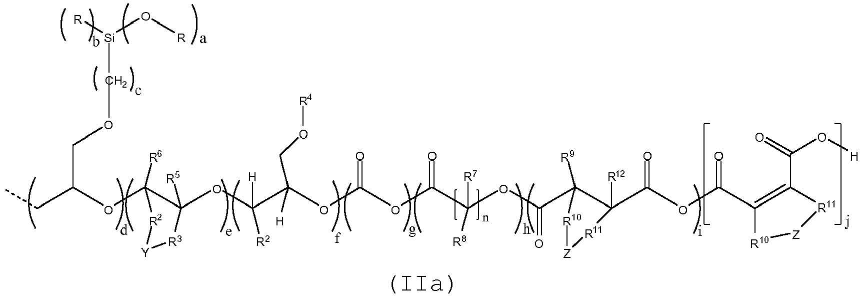 and the substituents R, R²-R¹², the radicals Y and Z and also the indices a, b, c, d, e, f, g, h, i, j and n correspond to the definitions given above for the compounds of the Formula (Ia).

6. Process for preparing alkoxysilyl-functional polyether-siloxanes and mixtures thereof according to at least one of Claims 1 to 5, **characterized in that** polyether-siloxanes or silanols are alkoxylated by means of epoxides bearing alkoxysilyl groups with the aid of DMC catalysts.

7. Process for preparing alkoxysilyl-functional polyether-siloxanes and mixtures thereof according to at least one of Claims 1 to 5 by a transition-metal catalysed SiC coupling of hydrogensiloxanes having SiH groups with unsaturated polyethers bearing alkoxysilyl groups.

8. Process for preparing alkoxysilyl-functional polyether-siloxanes according to Claim 7 which proceeds with retention of the siloxane skeleton.

9. Process for preparing alkoxysilyl-functional polyether-siloxanes according to at least one of Claims 6 to 8, wherein alkoxysilyl-functional polyether-siloxanes of the Formula (I) and mixtures thereof are obtained by
a) alkoxylation of silicone-polyether copolymers by means of epoxy-functional alkoxysilanes over double metal cyanide catalysts and/or
b) hydrosilylative coupling of unsaturated polyethers bearing alkoxysilyl groups which have been obtained beforehand by alkoxylation of the corresponding unsaturated starter compounds by means of epoxy-functional alkoxysilanes over DMC catalysts.

10. Process according to Claim 9 for preparing alkoxysilyl-functional polyether-siloxanes of the Formula (I) and mixtures thereof by alkoxylation of silicone-polyether copolymers by means of epoxy-functional alkoxysilanes over double metal cyanide catalysts.

11. Process according to Claim 9 for preparing alkoxysilyl-functional polyether-siloxanes of the Formula (I) and mixtures thereof by hydrosilylative coupling of unsaturated polyethers bearing alkoxysilyl groups which are prepared by alkoxylation of the corresponding unsaturated starter compounds by means of epoxy-functional alkoxysilanes over DMC catalysts.

12. Process according to Claim 9 for preparing alkoxysilyl-functional polyether-siloxanes of the Formula (I) and mixtures thereof, **characterized in that** at least one alkylene oxide, a glycidyl compound, a lactone and/or a cyclic anhydride or an epoxy-functional alkoxysilane of the Formula (III), 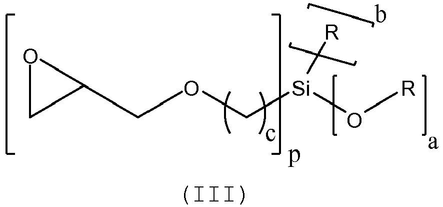 where
the indices a, b and c and also the radical R have the meanings defined for Formula (Ia) and p is an integer corresponding to the difference 4-a-b,
is added on to OH-bearing siloxane-bound or free polyethers of the polyether-siloxane systems functioning as starter compounds with ring opening.

13. Process according to Claim 12, **characterized in that** 3-glycidyloxypropyltrimethoxysilane, 3-glycidyloxypropyltriethoxysilane, 3-glycidyloxy-propyltripropoxysilane, 3-glycidyloxypropyltriisopropoxysilane, bis(3-glycidyloxypropyl)dimethoxysilane, bis(3-glycidyloxypropyl)diethoxysilane, 3-glycidyloxyhexyltrimethoxysilane, 3-glycidyloxyhexyltriethoxysilane, 3-glycidyloxypropylmethyl-dimethoxysilane, 3-glycidyloxypropylethyldiethoxysilane are used as epoxide-functional alkoxysilanes of the Formula (III).

14. Process according to Claim 9 for preparing alkoxysilyl-functional polyether-siloxanes of the Formula (I) and mixtures thereof, **characterized in that** unsaturated polyethers bearing alkoxysilyl groups are hydrosilylatively coupled with hydrogensiloxanes.

15. Process according to Claim 14, **characterized in that** hydrogensiloxanes of the Formula (XI) and mixtures thereof 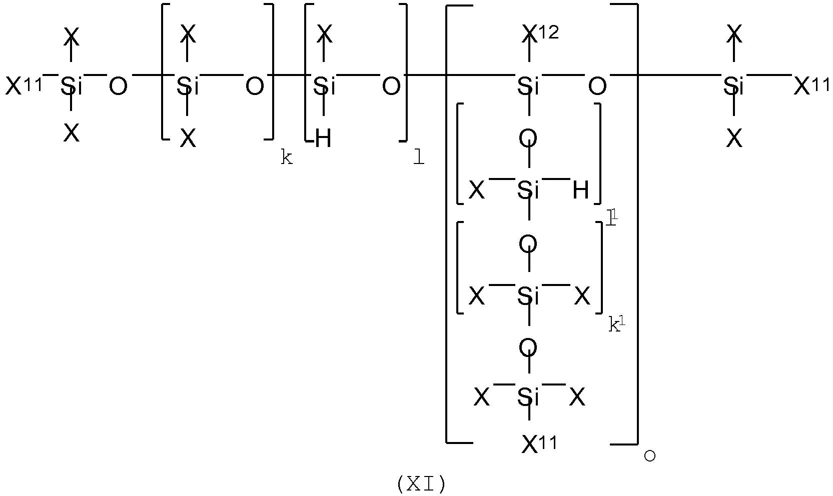 where
X¹¹ is, as desired, X or H,
X¹² corresponds, as desired, to X¹¹ or the fragment of the Formula (XIa), 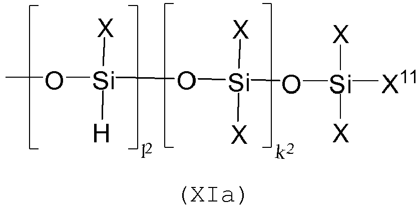
where the indices k, k¹, k², and o have the meanings given above for Formula (I) and
l, l¹, l² are each, independently of one another, an integer from 0 to 120, preferably from 0 to 60, in particular from 0 to 50,
with the proviso that X¹¹ is hydrogen at least once when the sum of l, l¹ and l² is zero, and with the proviso that the sum of l, l¹ and l² is at least 1 when X¹¹ is X.

16. Polymer article produced using alkoxysilyl-functional polyether-siloxanes according to at least one of Claims 1 to 5.

17. Curable composition produced using alkoxysilyl-functional polyether-siloxanes according to at least one of Claims 1 to 5.

18. Composition containing alkoxysilyl-functional polyether-siloxanes according to at least one of Claims 1 to 5 for use as surfactants, adhesives, sealants and binders, fillers, auxiliaries and additives, emulsifiers, wetting additives and dispersants, polymer additives, levelling agents for surface coatings, lubricants, as auxiliaries for tertiary petroleum recovery, as textiles assistants for softening fibres, yarns or sheet-like textile products, as antifoams, as cosmetic additives and as foam stabilisers, in particular in polyurethane foam.

19. Composition containing alkoxysilyl-functional polyether-siloxanes according to at least one of Claims 1 to 5, if desired dissolved in a solvent, for use in a process suitable for coating, extrusion of plastics, adhesive bonding, stabilisation of polymers, wetting, defoaming, emulsification, dispersing and/or surface modification.

## Revendications

1. Polyéthersiloxanes à fonctionnalité alcoxysilyle de formule (I) ainsi que leurs mélanges, 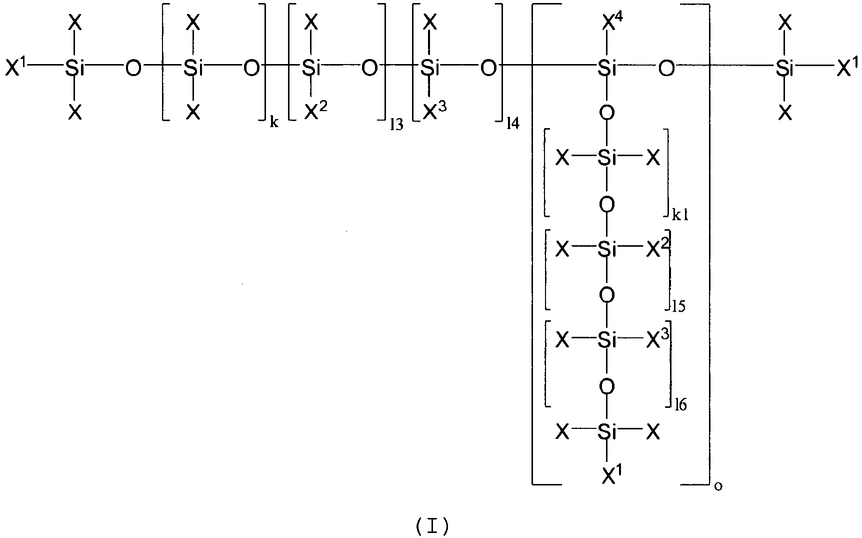 dans laquelle
X représente un radical hydrocarboné linéaire, cyclique ou ramifié, aliphatique ou aromatique, saturé ou insaturé comprenant 1 à 20 atomes de carbone, qui peut le cas échéant contenir des hétéroatomes tels que l'oxygène, l'azote, le phosphore ou le soufre,
X¹ représente, au choix, X, X² ou X³,
X² représente un radical polyoxyalkylène portant des groupes alcoxysilyle, à fonctionnalité OH, le cas échéant modifié par ester ou carbonate, de formule (Ia), 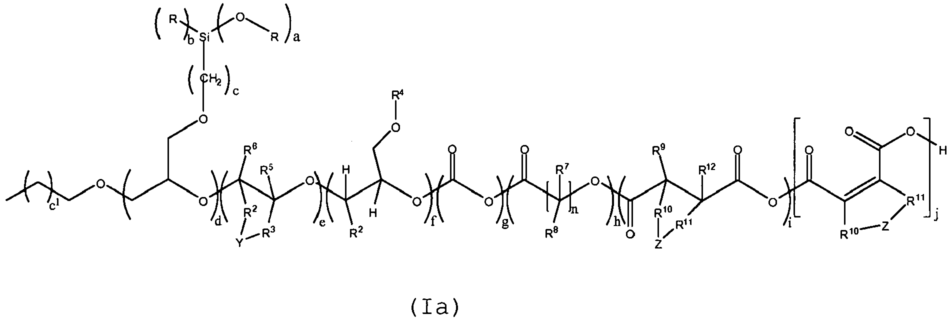
X³ représente un radical polyoxyalkylène éthérifié en position terminale de formule (Ib), 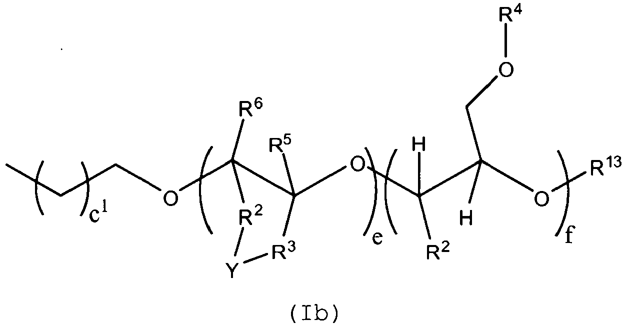
dans laquelle
R¹³ représente au choix un groupe alkyle comprenant 1 à 18 atomes de carbone ou un radical polyoxyalkylène estérifié en position terminale par un acide carboxylique monofonctionnel de formule (Ic) 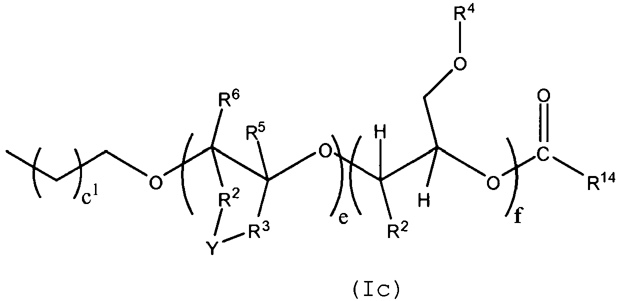
dans laquelle
R¹⁴ représente un radical hydrocarboné saturé ou monoinsaturé ou polyinsaturé, linéaire ou ramifié, aliphatique ou aromatique comprenant 1 à 30 atomes de carbone, qui peut porter à son tour des groupes OH,
X⁴ correspond à X¹ ou au fragment de formule (Id) 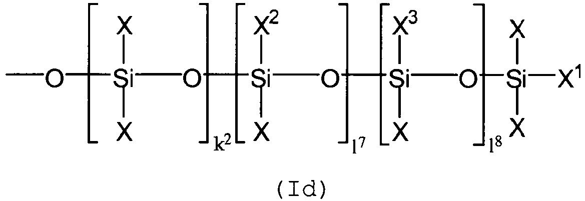
dans laquelle
k, k¹ et k² représentent, indépendamment les uns des autres, des nombres entiers de 0 à 500,
l³, l⁴, l⁵, l⁶, l⁷ et l⁸ représentent, indépendamment les uns des autres, des nombres entiers de 0 à 60,
o représente un nombre entier de 0 à 10,
étant entendu que
X¹ représente au moins une fois X² si la somme de l³, l⁶ et l⁷ vaut zéro,
et que
la somme de l³, l⁶ et l⁷ vaut au moins 1, lorsque X¹ est différent de X²,
a représentant un nombre entier de 1 à 3,
b représentant un nombre entier de 0 à 2,
la somme de a et b valant 3,
c représentant un nombre entier de 0 à 24,
c¹ représentant un nombre entier de 0 à 24,
d représentant un nombre entier de 1 à 500,
e représentant un nombre entier de 0 à 5000,
n représentant un nombre entier de 2 à 8 et
f, g, h, i et j représentant à chaque fois des nombres entiers de 0 à 500,
et étant entendu que les fragments portant les indices d à j sont librement permutables entre eux, c'est-à-dire remplaçables les uns par les autres dans la séquence dans la chaîne polyéther, et les différentes unités monomères des fragments portant les nombres d'indice d à j étant formés sous forme de blocs entre eux ou pouvant également se trouver avec une répartition statistique,
et étant entendu que les fragments portant les indices k, k¹, k², l³, l⁴, l⁶, l⁶, l⁷, l⁸ et o sont librement permutables entre eux, c'est-à-dire remplaçables les uns par les autres dans la chaîne siloxane et peuvent se trouver au choix répartis de manière statistiquement ou alignés en blocs,
R représente un ou plusieurs radicaux identiques ou différents, choisis parmi les radicaux alkyle comprenant 1 à 20, en particulier 1 à 6 atomes de carbone ou les groupes halogénoalkyle comprenant 1 à 20 atomes de carbone, linéaires ou ramifiés, saturés, monoinsaturés ou polyinsaturés,
ainsi que
R² ou R³, ainsi que R⁵ ou R⁶ représentent, de manière identique ou indépendamment l'un de l'autre, H ou un radical hydrocarboné, saturé ou le cas échéant monoinsaturé ou polyinsaturé, également substitué davantage, le cas échéant monovalent ou polyvalent, où, pour les radicaux R⁵ ou R⁶, il est vrai qu'ils représentent un radical hydrocarboné monovalent, le radical hydrocarboné pouvant former un pont cycloaliphatique via le fragment Y, Y pouvant également être absent, ou encore représenter un pont méthylène comprenant 1 ou 2 unités méthylène ; si Y représente 0, R² ou R³ représentent, indépendamment l'un de l'autre, un radical linéaire ou ramifié comprenant 1 à 20, de préférence 1 à 10 atomes de carbone, qui peuvent à leur tour être substitués davantage et porter des groupes fonctionnels tels que des halogènes, des groupes hydroxyle ou des groupes glycidyloxypropyle,
R⁴ représente un radical alkyle linéaire ou ramifié comprenant 1 à 18 atomes de carbone, qui peut être lié à un radical aromatique ou cycloaliphatique et
R⁷ et R⁸ représentent, indépendamment l'un de l'autre, soit hydrogène, soit des groupes alkyle, alcoxy, aryle ou aralkyle,
R⁹, R¹⁰, R¹¹ et R¹² représentent, indépendamment les uns des autres, soit hydrogène, soit des groupes alkyle, alcényle, alcoxy, aryle ou aralkyle, le radical hydrocarboné pouvant former un pont cycloaliphatique ou aromatique via le fragment Z et Z pouvant représenter un radical alkylène ainsi qu'un radical alcénylène divalent.

2. Copolymères ramifiés en peigne sous forme de polyéthersiloxanes selon la revendication 1 présentant une fonctionnalisation par alcoxysilyle selon la formule (I), dans lesquels les chaînes polyéther sont à chaque fois liées via des liaisons SiC à la structure de base polysiloxane.

3. Copolymères linéaires à trois blocs de polyéthersiloxane-polyéther présentant une liaison Si-C selon la revendication 1, o valant 0 (zéro), l³ identique à l⁴ valant 0 (zéro) et X¹ identique à X² représentant un radical alcoxysilylpolyéther.

4. Copolymères ramifiés à blocs de polyéther-siloxane-polyéther présentant une liaison Si-C selon la revendication 1, o étant différent de 0 (zéro), l³ identique à l⁴ valant 0 (zéro), l⁵ identique à l⁶ valant 0 (zéro) et X¹ identique à X² représentant un radical alcoxysilylpolyéther.

5. Copolymères linéaires à trois blocs de polyéthersiloxane-polyéther de formule (II), dans lesquels les chaînes polyéther pourvues de groupes alcoxysilyle sont liées via une liaison Si-O-C au corps de siloxane, 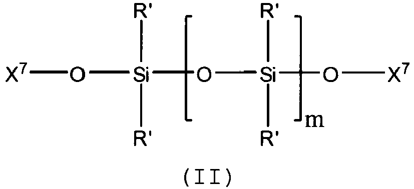 dans laquelle
R' correspond à un ou plusieurs radicaux alkyle comprenant 1 à 20 atomes de carbone, identiques ou différents, linéaires ou ramifiés, saturés, monoinsaturés ou polyinsaturés,
et
m représente un nombre entier de 0 à 5000, et
X⁷ correspond au fragment polyéther de formule (IIa) et 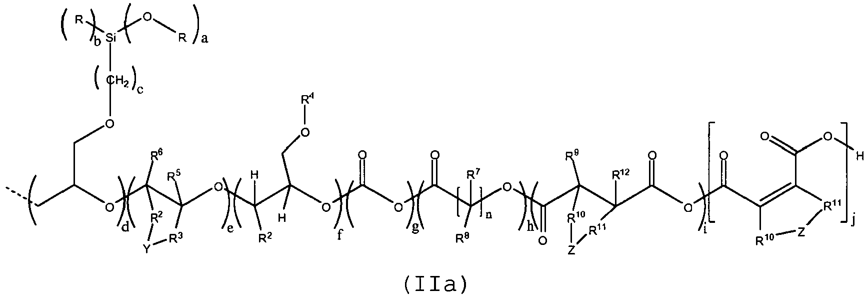
les substituants R, R²-R¹², les radicaux Y et Z ainsi que les indices a, b, c, d, e, f, g, h, i, j et n correspondent aux définitions mentionnées ci-dessus pour les composés de formule (Ia).

6. Procédé pour la préparation de polyéthersiloxanes à fonctionnalité alcoxysilyle et leurs mélanges selon au moins l'une quelconque des revendications 1 à 5, **caractérisé en ce que** les polyéthersiloxanes ou les silanols sont alcoxylés à l'aide de catalyseurs DMC avec des époxydes portant des groupes alcoxysilyle.

7. Procédé pour la préparation de polyéthersiloxanes à fonctionnalité alcoxysilyle et leurs mélanges selon au moins l'une quelconque des revendications 1 à 5, par une liaison SiC, catalysée par un métal de transition, d'hydrogénosiloxanes présentant des groupes SiH avec des polyéthers insaturés portant des groupes alcoxysilyle.

8. Procédé pour la préparation de polyéthersiloxanes à fonctionnalité alcoxysilyle selon la revendication 7, qui se déroule avec obtention de la structure siloxane.

9. Procédé pour la préparation de polyéthersiloxanes à fonctionnalité alcoxysilyle selon au moins l'une quelconque des revendications 6 à 8, en ce que des polyéthersiloxanes à fonctionnalité alcoxysilyle de formule (I) et leurs mélanges sont obtenus par
a) alcoxylation de copolymères de silicium-polyéther avec des alcoxysilanes à fonctionnalité époxy sur des catalyseurs de type cyanure métallique double
et/ou
b) liaison avec hydrosilylation de polyéthers insaturés portant de groupes alcoxysilyle, qui sont obtenus au préalable par une alcoxylation des composés de départ insaturés correspondants avec des alcoxysilanes à fonctionnalité époxy sur des catalyseurs de type DMC.

10. Procédé selon la revendication 9 pour la préparation de polyéthersiloxanes à fonctionnalité alcoxysilyle de formule (I) et leurs mélanges au moyen d'une alcoxylation de copolymères de silicium-polyéther avec des alcoxysilanes à fonctionnalité époxy sur des catalyseurs de type cyanure métallique double.

11. Procédé selon la revendication 9 pour la préparation de polyéthersiloxanes à fonctionnalité alcoxy de formule (I) et leurs mélanges au moyen d'une liaison avec hydrosilylation de polyéthers insaturés portant de groupes alcoxysilyle, qui sont préparés par une alcoxylation des composés de départ insaturés correspondants avec des alcoxysilanes à fonctionnalité époxy sur des catalyseurs de type DMC.

12. Procédé selon la revendication 9 pour la préparation de polyéthersiloxanes à fonctionnalité alcoxysilyle de formule (I) et leurs mélanges, **caractérisé en ce qu'**au moins un oxyde d'alkylène, un composé de glycidyle, une lactone et/ou un anhydride cyclique ainsi qu'un alcoxysilane à fonctionnalité époxy de formule (III), 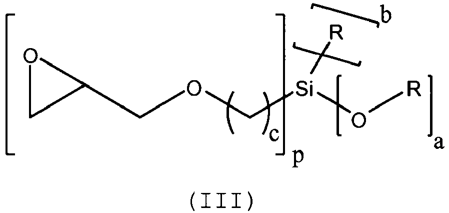 dans laquelle
les indices a, b et c ainsi que le radical R présentent les significations définies pour la formule (Ia) et p est un nombre entier qui correspond à la différence de 4-a-b,
sont additionnés avec ouverture de cycle sur des polyéthers présentant des groupes OH, liés par siloxane ou libres, des systèmes de polyéthersiloxane fonctionnant comme composés de départ.

13. Procédé selon la revendication 12, **caractérisé en ce qu'**on utilise, comme alcoxysilanes à fonctionnalité époxyde selon la formule (III), du 3-glycidyloxypropyltriméthoxysilane, du 3-glycidyloxypropyltriéthoxysilane, du 3-glycidyloxypropyltripropoxysilane, du 3-glycidyloxypropyltriisopropoxysilane, du bis(3-glycidyloxypropyl)diméthoxysilane, du bis(3-glycidyloxypropyl)diéthoxysilane, du 3-glycidyloxyhexyltriméthoxysilane, du 3-glycidyloxyhexyltriéthoxysilane, du 3-glycidyloxypropylméthyl-diméthoxy-silane, du 3-glycidyloxypropyl-éthyl-diéthoxysilane.

14. Procédé selon la revendication 9 pour la préparation de polyéthersiloxanes à fonctionnalité alcoxysilyle de formule (I) et leurs mélanges, **caractérisé en ce que** des polyéthers insaturés portant des groupes alcoxysilane sont liés par hydrosilylation sur des hydrogénosiloxanes.

15. Procédé selon la revendication 14, **caractérisé en ce que** des hydrogénosiloxanes de formule (XI) et leurs mélanges 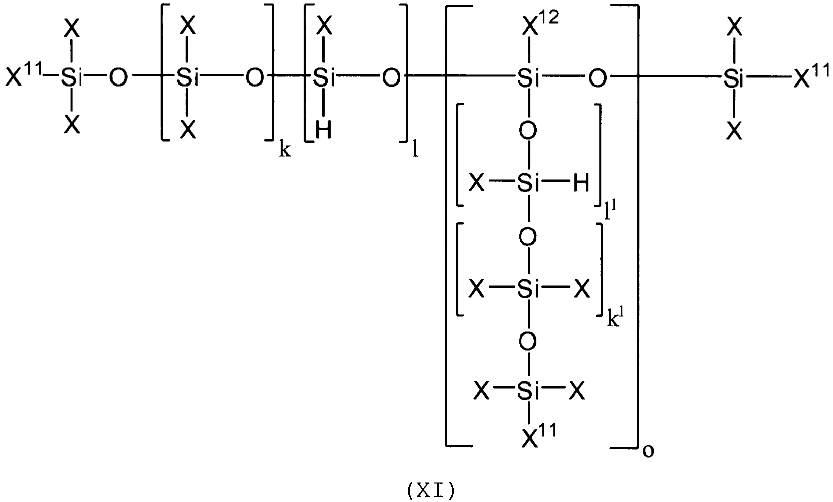 dans laquelle
X¹¹ représente, au choix, X ou H,
X¹² correspond au choix à X¹¹ ou au fragment de formule (XIa) 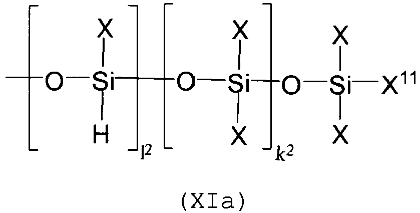
dans laquelle les indices k, k¹, k² et o ont les significations mentionnées ci-dessus pour la formule (I)
et
l, l¹, l² représentent, indépendamment les uns des autres, des nombres entiers de 0 à 120, de préférence de 0 à 60, en particulier de 0 à 50,
étant entendu que X¹¹ représente au moins une fois hydrogène, lorsque la somme de l, l¹ et l² vaut zéro et étant entendu que la somme de l, l¹ et l² vaut au moins 1 lorsque X¹¹ représente X.

16. Objet polymère préparé avec utilisation de polyéthersiloxanes à fonctionnalité alcoxysilyle selon au moins l'une quelconque des revendications 1 à 5.

17. Composition durcissable préparée avec utilisation de polyéthersiloxanes à fonctionnalité alcoxysilyle selon au moins l'une quelconque des revendications 1 à 5.

18. Composition contenant des polyéthersiloxanes à fonctionnalité alcoxysilyle selon au moins l'une quelconque des revendications 1 à 5 pour une utilisation comme agents tensioactifs, adhésifs, matériaux d'étanchéité et liants, charges, adjuvants et additifs, émulsifiants, additifs mouillants et dispersants, additif polymère, agents d'étalement de laques, lubrifiants, comme adjuvants pour la récupération assistée de pétrole, comme adjuvants textiles pour l'avivage de fibres, de fils ou de produits textiles plats, comme antimousses, comme additifs cosmétiques ou comme stabilisants de mousse, en particulier dans la mousse de polyuréthane.

19. Composition contenant des polyéthersiloxanes à fonctionnalité alcoxysilyle selon au moins l'une quelconque des revendications 1 à 5, le cas échéant dissous dans un solvant, pour une utilisation dans un procédé approprié pour le revêtement, l'extrusion de matériaux synthétiques, le collage, la stabilisation de polymères, le mouillage, le démoussage, l'émulsification, la dispersion et/ou la modification de surface.
